# FASCICULE DE BREVET EUROPEEN

(11) **EP 2 684 506 B1**
(45) Date de publication et mention de la délivrance du brevet: **09.09.2015**
(21) Numéro de dépôt: 13176205.6
(22) Date de dépôt: 11.07.2013
(51) Int. Cl.: A47L 15/42, D06F 39/00, D06F 39/08

(54) **Procédé de commande en fonctionnement d'une machine à laver et machine à laver associée**
Steuerverfahren einer laufenden Waschmaschine, und entsprechende Waschmaschine
Method for controlling the operation of a washing machine and associated washing machine

(30) Priorité: 12.07.2012 FR 1201980
(43) Date de publication de la demande: 15.01.2014
(73) Titulaire: Groupe Brandt, 92500 Rueil-Malmaison (FR)
(72) Inventeur: Bonnet, Philippe, 85140 L'Oie (FR); Remeur, Daniel, 85170 Dompierre sur Yon (FR)

(56) Documents cités:
- DE-U1- 9 415 480
- US-A1- 2011 048 459

## Description

La présente invention concerne une machine à laver comprenant un réservoir d'eau de lavage et/ou de rinçage, et en particulier une machine à laver la vaisselle ou une machine à laver le linge.

Elle concerne également un procédé de commande en fonctionnement d'une machine à laver comprenant un réservoir d'eau de lavage et/ou de rinçage.

De manière générale, la présente invention concerne les machines à laver comprenant un réservoir d'eau de lavage et/ou de rinçage permettant l'utilisation de cette eau de lavage et/ou de rinçage au cours d'une phase suivante d'un cycle de fonctionnement ou lors d'un cycle de fonctionnement suivant.

Plus particulièrement, la présente invention trouve son application dans les machines à laver domestiques, et en particulier dans les machines à laver la vaisselle et les machines à laver le linge.

On connaît le document DE 44 37 346 et US2011/04859 qui décrivent une machine à laver comprenant une cuve de lavage, un circuit hydraulique de distribution d'eau et une pompe de circulation d'eau. La pompe de circulation d'eau est une pompe centrifuge.

La pompe centrifuge comprend une connexion fluidique de mise à l'air de l'intérieur du corps de la pompe centrifuge avec l'extérieur de la pompe centrifuge de sorte à évacuer l'air emprisonné à l'intérieur du corps de la pompe centrifuge vers l'extérieur au cours du remplissage en eau du circuit hydraulique de distribution d'eau de la machine à laver.

Une extrémité de la connexion fluidique de mise à l'air de l'intérieur du corps de la pompe centrifuge comprend une membrane permettant de laisser passer uniquement l'air emprisonné à l'intérieur du corps de la pompe centrifuge vers l'extérieur et de bloquer un flux d'eau à l'intérieur du corps de la pompe centrifuge.

Cependant, une telle pompe centrifuge présente l'inconvénient de rajouter un dispositif de mise à l'air sur le corps de la pompe centrifuge de sorte à évacuer l'air emprisonné à l'intérieur de la pompe centrifuge au travers d'une canalisation et d'une membrane.

Par conséquent, une telle pompe centrifuge comprenant un dispositif de mise à l'air intégré sur le corps de celle-ci est onéreuse.

La présente invention a pour but de résoudre les inconvénients précités et de proposer un procédé de commande en fonctionnement d'une machine à laver, ainsi qu'une machine à laver, permettant, au cours d'une étape de remplissage en eau d'un réservoir d'eau de lavage et/ou de rinçage, d'amorcer une pompe de récupération d'eau de lavage et/ou de rinçage de sorte à évacuer l'air emprisonné à l'intérieur de cette pompe de récupération d'eau de lavage et/ou de rinçage.

A cet égard, la présente invention vise, selon un premier aspect, un procédé de commande en fonctionnement d'une machine à laver comprenant une cuve de lavage, un réservoir d'eau de lavage et/ou de rinçage, un circuit hydraulique de distribution d'eau, ledit circuit hydraulique de distribution d'eau reliant ladite cuve de lavage de ladite machine à laver audit réservoir d'eau.

Ledit circuit hydraulique de distribution d'eau comprend :
- une pompe de récupération d'eau de sorte à remplir en eau de lavage et/ou de rinçage au moins un compartiment interne de stockage d'eau dudit réservoir d'eau depuis un puisard de ladite cuve de lavage,
- une vanne, ladite vanne étant montée dans ledit circuit hydraulique de distribution d'eau entre ladite pompe de récupération d'eau et ledit réservoir d'eau.

Ledit procédé comprend une étape de remplissage en eau de lavage et/ou de rinçage dudit réservoir d'eau.

Selon l'invention, ladite étape de remplissage en eau comprend :
- une étape d'alimentation en eau de lavage et/ou de rinçage dudit puisard de ladite cuve de lavage ;
- une étape d'ouverture de ladite vanne ;
- une première étape de mise en fonctionnement de ladite pompe de récupération d'eau de sorte à évacuer une partie de l'eau de lavage et/ou de rinçage depuis ledit puisard de ladite cuve de lavage vers ledit réservoir d'eau ;
- une étape de maintien à l'arrêt de ladite pompe de récupération d'eau et de maintien en position ouverte de ladite vanne de sorte à évacuer de l'air emprisonné dans ledit circuit hydraulique de distribution d'eau entre ledit puisard de ladite cuve de lavage et ledit réservoir d'eau par un écoulement d'eau par gravité vers ledit puisard de ladite cuve de lavage.

Ainsi, suite à la mise en oeuvre de l'étape de maintien à l'arrêt de la pompe de récupération d'eau et de maintien en position ouverte de la vanne, l'air contenu dans la branche du circuit hydraulique de distribution d'eau reliant le puisard de la cuve de lavage au réservoir d'eau au moyen de la pompe de récupération d'eau et de la vanne est évacué vers le puisard de la cuve de lavage au moyen de l'écoulement d'eau circulant par gravité depuis le réservoir d'eau vers le puisard de la cuve de lavage et traversant la vanne et la pompe de récupération d'eau.

De cette manière, suite au remplissage en eau du réservoir d'eau jusqu'à un niveau d'eau prédéterminé, la branche du circuit hydraulique de distribution d'eau reliant le puisard de la cuve de lavage au réservoir d'eau au moyen de la pompe de récupération d'eau et de la vanne est vidée de l'air emprisonné entre le puisard de la cuve de lavage et la vanne au moyen de l'écoulement d'eau circulant par gravité depuis le réservoir d'eau vers le puisard de la cuve de lavage et traversant la vanne et la pompe de récupération d'eau.

En outre, un tel procédé permet de mettre en fonctionnement une pompe de récupération d'eau alimentant un réservoir d'eau sans ajouter un dispositif de mise à l'air à ladite pompe de récupération d'eau.

De cette manière, le coût d'obtention de la machine à laver est réduit.

Lors de la mise en service de la machine à laver et lors d'un cycle de fonctionnement mis en oeuvre par la machine à laver où le réservoir d'eau est vide d'eau, la branche du circuit hydraulique de distribution d'eau reliant le réservoir d'eau au puisard de la cuve de lavage au moyen de la vanne et de la pompe de récupération d'eau est vide d'eau.

Le procédé comprend une première étape correspondant à une étape d'alimentation en eau de lavage et/ou de rinçage du puisard de la cuve de lavage.

Avantageusement, l'eau de lavage et/ou de rinçage alimentée dans le puisard de la cuve de lavage est de l'eau utilisée au cours d'une phase d'un cycle de fonctionnement mis en oeuvre par la machine à laver, et en particulier d'une phase de rinçage chaud.

L'eau de lavage et/ou de rinçage alimentée dans le puisard de la cuve de lavage est de l'eau provenant d'un réseau d'eau externe.

Pratiquement, au cours de l'étape d'alimentation en eau de lavage et/ou de rinçage du puisard de la cuve de lavage, la vanne est maintenue en position fermée.

Ainsi, l'eau de lavage et/ou de rinçage alimentée dans le puisard de la cuve de lavage, et préférentiellement utilisée au cours d'une phase d'un cycle de fonctionnement mis en oeuvre par la machine à laver, n'est pas mise en contact avec de l'eau pouvant rester dans le réservoir d'eau de sorte à éviter de polluer ce bain d'eau de lavage et/ou de rinçage au cours de la phase d'un cycle de fonctionnement mis en oeuvre par la machine à laver et à garantir la performance de lavage de la machine à laver.

En outre, lorsque la vanne est une électrovanne, le maintien de la vanne en position fermée, au cours de l'étape d'alimentation en eau du puisard de la cuve de lavage, permet de limiter un échauffement de la vanne et donc de prolonger la durée de vie de celle-ci en évitant d'alimenter en énergie électrique une bobine pendant une longue période.

Suite à l'étape d'ouverture de la vanne, l'eau de lavage et/ou de rinçage présente dans le puisard de la cuve de lavage peut s'écouler dans la branche du circuit hydraulique de distribution d'eau reliant le puisard de la cuve de lavage au réservoir d'eau au moyen de la pompe de récupération d'eau et de la vanne, en particulier lorsque la branche du circuit hydraulique de distribution d'eau reliant le réservoir d'eau au puisard de la cuve de lavage au moyen de la vanne et de la pompe de récupération d'eau est vide d'eau, ou lorsque le niveau d'eau dans la branche du circuit hydraulique de distribution d'eau reliant le réservoir d'eau au puisard de la cuve de lavage au moyen de la vanne et de la pompe de récupération d'eau est inférieur au niveau d'eau dans le puisard de la cuve de lavage.

Ainsi, suite au remplissage en eau du puisard de la cuve de lavage jusqu'à un niveau d'eau prédéterminé et à l'ouverture de la vanne, la branche du circuit hydraulique de distribution d'eau reliant le puisard de la cuve de lavage au réservoir d'eau au moyen de la pompe de récupération d'eau et de la vanne est remplie en eau selon le principe des vases communiquant.

Suite à l'étape d'ouverture de la vanne, le procédé met en oeuvre une première étape de mise en fonctionnement de la pompe de récupération d'eau de sorte à évacuer une partie de l'eau de lavage et/ou de rinçage depuis le puisard de la cuve de lavage vers le réservoir d'eau.

Avantageusement, la vanne est activée en position ouverte avant la première mise en fonctionnement de la pompe de récupération d'eau.

Ainsi, un tampon d'air bloqué entre la pompe de récupération d'eau et la vanne est évacué en aval de la vanne suite à la mise en fonctionnement de la pompe de récupération d'eau de sorte à pouvoir évacuer le tampon d'air dans le réservoir d'eau.

En outre, au moins une bulle d'air bloquée entre le puisard de la cuve de lavage et la pompe de récupération d'eau peut être aspirée à l'intérieur de la pompe de récupération d'eau et reste à l'intérieur de celle-ci.

Par conséquent, ladite au moins une bulle d'air poussée à l'intérieur de la pompe de récupération d'eau engendre une diminution de la puissance de la pompe de récupération d'eau.

Selon une caractéristique de l'invention, au cours de la première étape de mise en fonctionnement de ladite pompe de récupération d'eau, ladite pompe de récupération d'eau est mise en fonctionnement pendant une durée prédéterminée.

Suite à la première étape de mise en fonctionnement de la pompe de récupération d'eau, le procédé comprend une étape de maintien à l'arrêt de la pompe de récupération d'eau et de maintien en position ouverte de la vanne.

Ainsi, lors de la mise en oeuvre de l'étape de maintien à l'arrêt de la pompe de récupération d'eau et de maintien en position ouverte de la vanne, ladite au moins une bulle d'air bloquée à l'intérieur de la pompe de récupération d'eau est évacuée vers le puisard de la cuve de lavage au moyen de l'écoulement d'eau circulant par gravité depuis le réservoir d'eau vers le puisard de la cuve de lavage et traversant la vanne et la pompe de récupération d'eau.

De cette manière, la branche du circuit hydraulique de distribution d'eau reliant le puisard de la cuve de lavage au réservoir d'eau au travers de la pompe de récupération d'eau et de la vanne est vidée de l'air introduit dans celle-ci suite à l'arrêt de la pompe de récupération d'eau et au maintien en position ouverte de la vanne.

En outre, suite à la mise en oeuvre de l'étape de maintien à l'arrêt de la pompe de récupération d'eau et de maintien en position ouverte de la vanne, la pompe de récupération d'eau peut être mise en fonctionnement pour remplir en eau le réservoir d'eau sans perturbations de celle-ci, et avec la possibilité d'exploiter toute la puissance de celle-ci.

Selon une caractéristique de l'invention, au cours de l'étape de maintien à l'arrêt de ladite pompe de récupération d'eau et de maintien en position ouverte de ladite vanne, ladite pompe de récupération d'eau est maintenue à l'arrêt pendant une durée prédéterminée.

Selon une caractéristique préférée de l'invention, suite à l'étape de maintien à l'arrêt de ladite pompe de récupération d'eau et de maintien en position ouverte de ladite vanne, ledit procédé comprend au moins une deuxième étape de mise en fonctionnement de ladite pompe de récupération d'eau de sorte à alimenter en eau de lavage et/ou de rinçage ledit réservoir d'eau.

Ainsi, le réservoir d'eau peut être rempli en eau sans perturbations de fonctionnement de la pompe de récupération d'eau.

La présente invention vise, selon un deuxième aspect, une machine à laver comprenant une unité de commande.

Selon l'invention, ladite unité de commande est adaptée à mettre en oeuvre le procédé de commande conforme à l'invention.

Cette machine à laver présente des caractéristiques et avantages analogues à ceux décrits précédemment en relation avec le procédé de commande selon l'invention.

D'autres particularités et avantages de l'invention apparaîtront encore dans la description ci-après.

Aux dessins annexés, donnés à titre d'exemples non limitatifs :
- la figure 1 est une première vue schématique partielle en perspective illustrant une machine à laver la vaisselle comprenant un réservoir d'eau de lavage et/ou de rinçage selon un mode de réalisation de l'invention ;
- la figure 2 est une deuxième vue schématique partielle en perspective illustrant une machine à laver la vaisselle comprenant un réservoir d'eau de lavage et/ou de rinçage selon un mode de réalisation de l'invention, où la cuve de lavage est partiellement ôtée ;
- la figure 3 est une vue schématique de côté illustrant une machine à laver la vaisselle comprenant un réservoir d'eau de lavage et/ou de rinçage selon un mode de réalisation de l'invention ;

- la figure 4 est une vue en section de la figure 3 selon le plan de coupe AA ;
- la figure 5 est une vue éclatée illustrant un réservoir d'eau de lavage et/ou de rinçage comprenant deux parois en forme en coque selon un mode de réalisation de l'invention ;
- la figure 6 est une vue de face illustrant l'une des deux parois en forme de coque selon un premier mode de réalisation ;
- la figure 7 est une vue de face illustrant l'une des deux parois en forme de coque selon un deuxième mode de réalisation ;
- la figure 8 est une vue schématique illustrant une partie d'un circuit hydraulique de distribution d'eau d'une machine à laver la vaisselle comprenant un réservoir d'eau de lavage et/ou de rinçage selon un mode de réalisation de l'invention ;
- la figure 9 est une vue schématique illustrant une partie d'un circuit hydraulique de distribution d'eau d'une machine à laver la vaisselle comprenant un réservoir d'eau de lavage et/ou de rinçage selon un mode de réalisation de l'invention ;
- les figures 10a à 10g sont des vues schématiques illustrant la circulation d'eau au travers d'une partie d'un circuit hydraulique de distribution d'eau d'une machine à laver la vaisselle comprenant un réservoir d'eau de lavage et/ou de rinçage pour amorcer une pompe de récupération d'eau au cours d'une étape de remplissage en eau du réservoir d'eau selon un mode de réalisation de l'invention ; et
- la figure 11 est une autre vue schématique illustrant une partie d'un circuit hydraulique de distribution d'eau d'une machine à laver la vaisselle comprenant un réservoir d'eau de lavage et/ou de rinçage selon un mode de réalisation de l'invention.

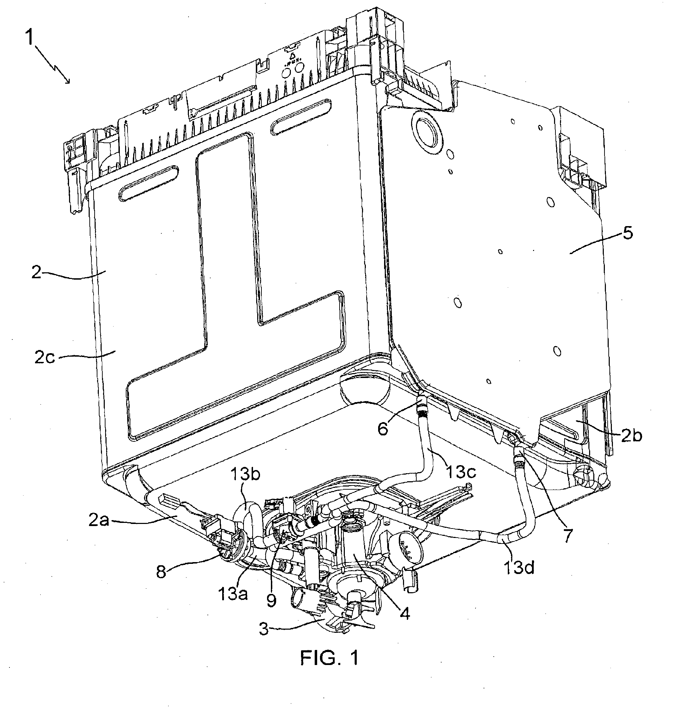

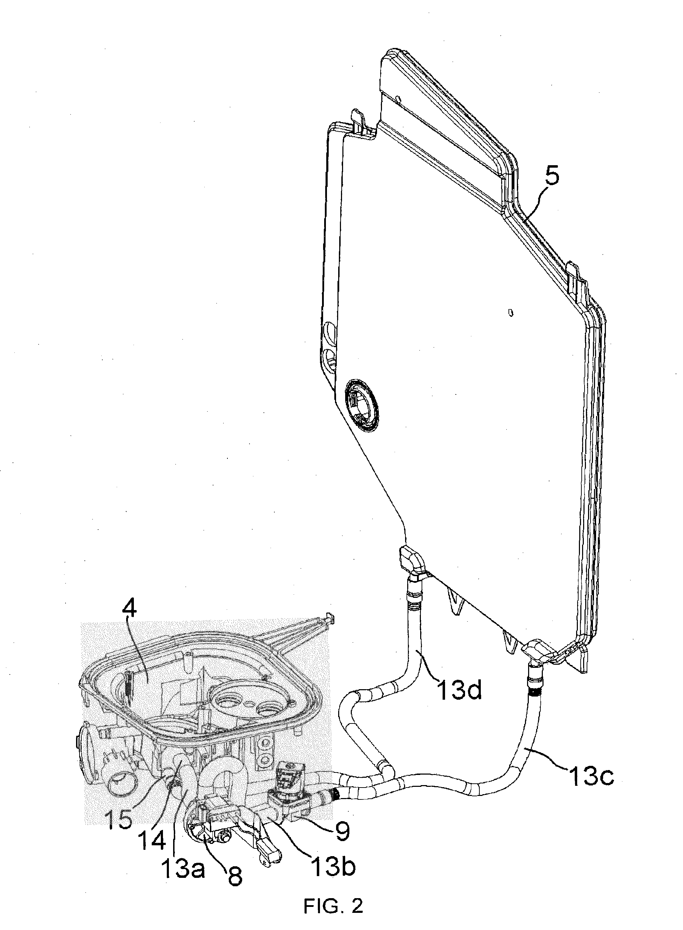

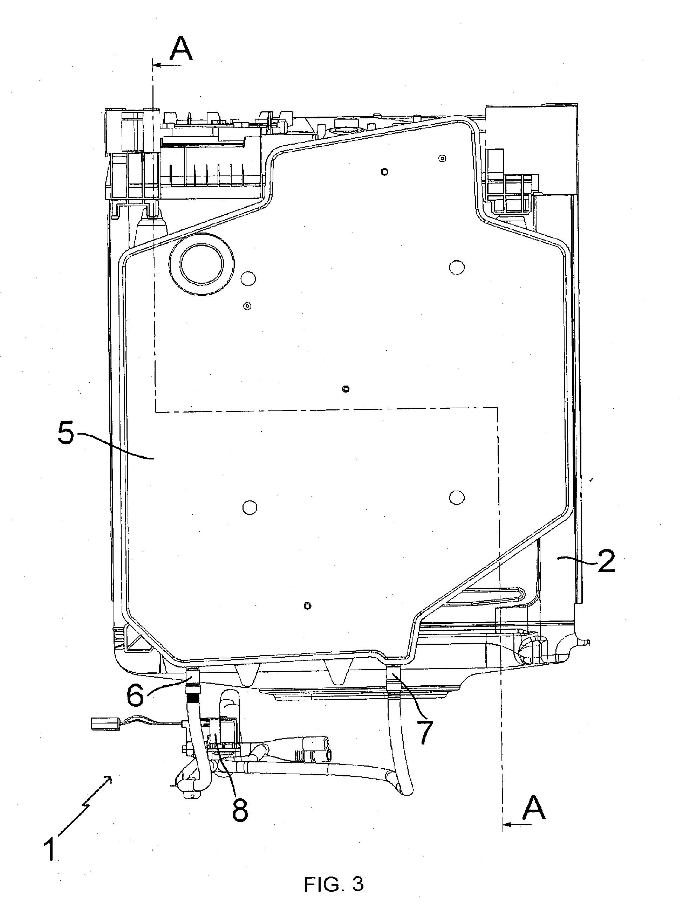

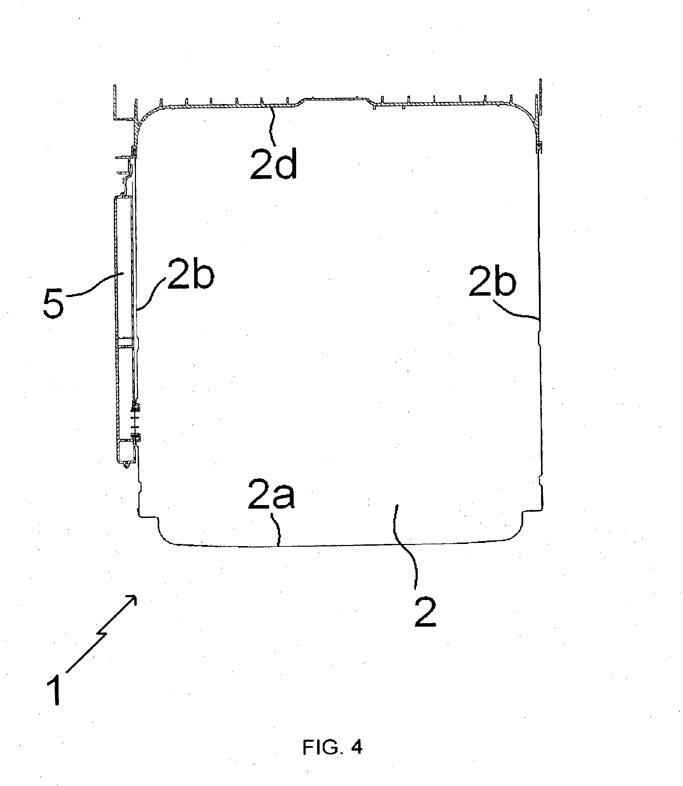

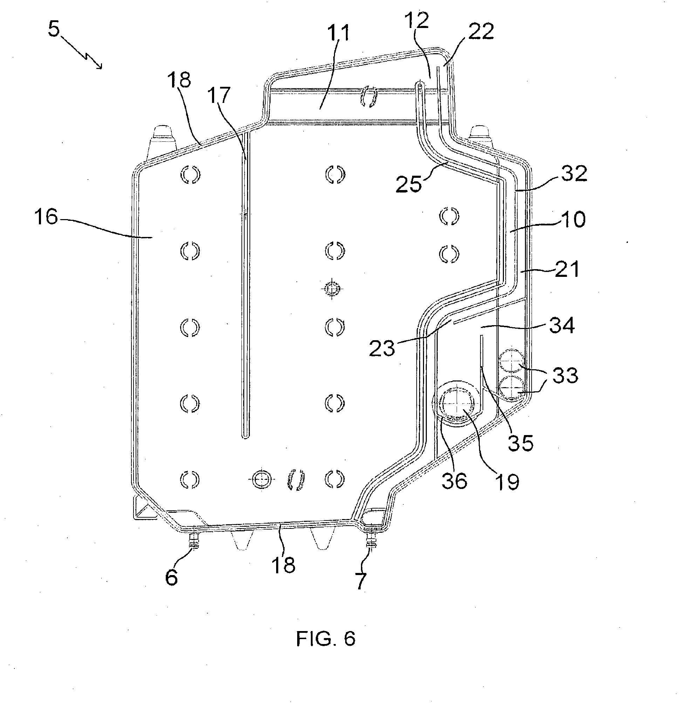

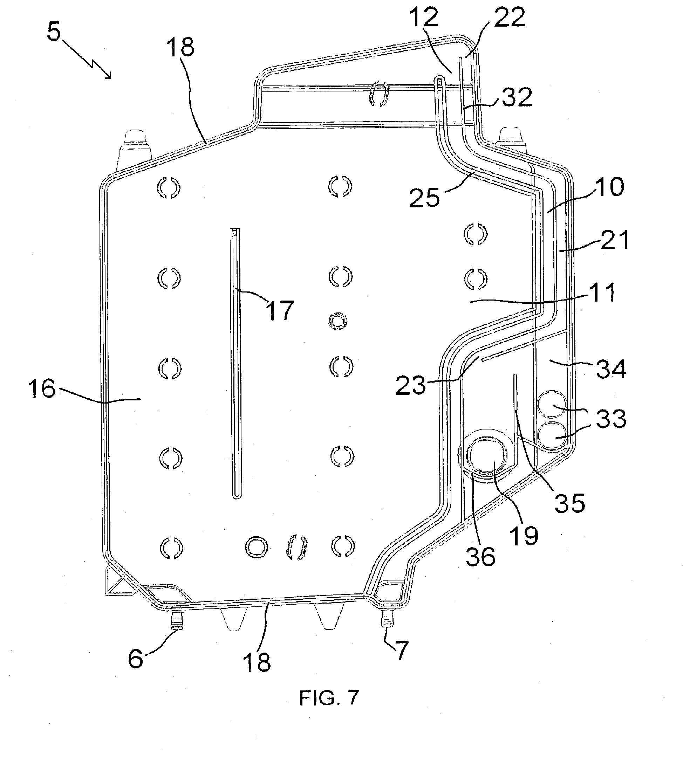

On va décrire tout d'abord, en référence aux figures 1 à 11, une machine à laver conforme à un mode de réalisation de l'invention.

Cette machine à laver peut être une machine à laver la vaisselle à usage domestique, ou une machine à laver le linge à usage domestique, ou une machine à laver et à sécher le linge à usage domestique.

On a illustré un mode de réalisation, en référence à la figure 1, décrivant une machine à laver la vaisselle à chargement frontal de la vaisselle. Bien entendu, la présente invention s'applique à tous les types de machine à laver, et notamment à chargement par le dessus.

Une machine à laver la vaisselle 1 comprend une cuve de lavage 2 dont la face frontale est fermée par une porte (non représentée).

Dans un mode de réalisation, la cuve de lavage 2 peut comprendre une carrosserie formée par au moins des parois latérales. La carrosserie de la machine à laver et à sécher la vaisselle 1 peut également comprendre une paroi supérieure pour les machines à laver et à sécher la vaisselle en pose libre.

La porte de la cuve de lavage 2 permet d'obturer une ouverture réalisée dans la cuve de lavage 2. Cette porte de la cuve de lavage 2 peut ainsi être mobile entre une position fermée dans laquelle elle obture l'ouverture, de manière étanche, et une position ouverte.

Dans un exemple de réalisation, et de manière nullement limitative, la porte de la cuve de lavage 2 est montée pivotante autour d'un axe de rotation solidaire de la carrosserie de la machine à laver la vaisselle 1.

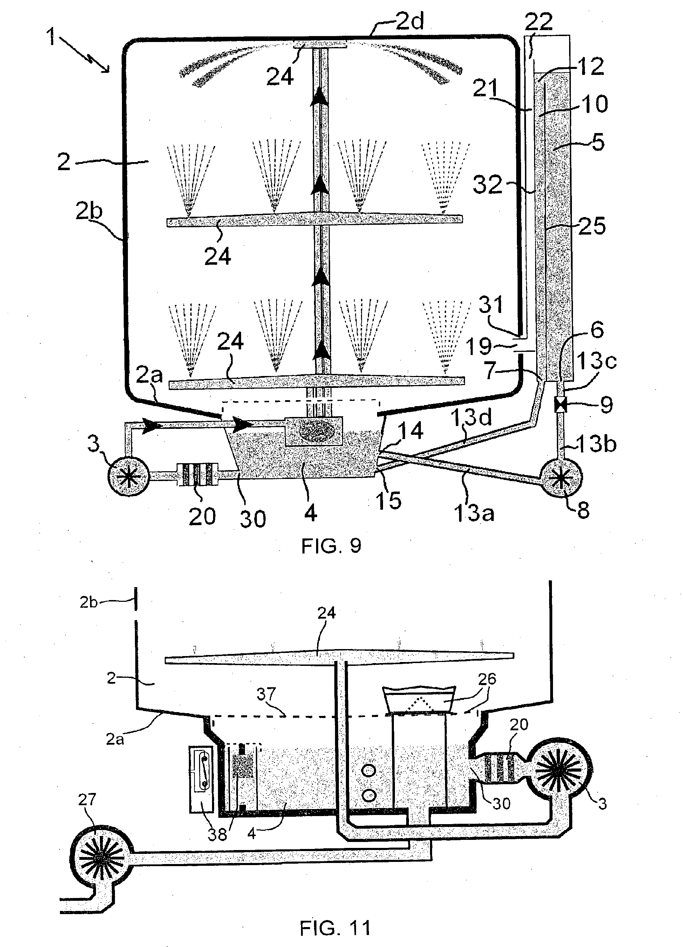

La cuve de lavage 2 comprend au moins un moyen d'aspersion d'eau 24 d'un bain de lavage et/ou de rinçage sur les pièces de vaisselle, tel qu'illustré à la figure 9.

Ici et de manière nullement limitative, la cuve de lavage 2 comprend un moulinet d'aspersion d'eau supérieur, un moulinet d'aspersion inférieur et une buse d'arrosage disposée au plafond de la cuve de lavage 2.

Une eau d'un bain de lavage et/ou de rinçage est définie comme de l'eau permettant le nettoyage de la vaisselle et circulant dans un circuit hydraulique de distribution d'eau d'une machine à laver la vaisselle 1. L'origine de l'eau d'un bain de lavage et/ou de rinçage est une eau arrivant du réseau d'alimentation de la machine à laver la vaisselle 1.

La cuve de lavage 2 comprend une paroi inférieure 2a, des parois latérales 2b, une paroi de fond 2c et une paroi supérieure 2d.

La carrosserie de la machine à laver la vaisselle 1 est adaptée à loger la cuve de lavage 2. Ladite cuve de lavage 2 est adaptée à contenir notamment l'eau des bains de lavage et/ou de rinçage des différentes phases d'un cycle de nettoyage.

Au moins un panier à vaisselle (non représenté) est monté à l'intérieur de la cuve de lavage 2.

En particulier, un panier à vaisselle peut être situé dans la partie supérieure de la cuve de lavage 2 et désigné par panier supérieur, et un panier à vaisselle peut être situé dans la partie inférieure de la cuve de lavage 2 et désigné par panier inférieur.

Les paniers à vaisselle peuvent être poussés et retirés en les faisant glisser à l'intérieur de la cuve de lavage 2 de la machine à laver la vaisselle 1 soit après la fin d'un cycle de nettoyage pour le déchargement de la vaisselle soit avant le début d'un cycle de nettoyage pour le chargement de la vaisselle.

Cette machine à laver la vaisselle 1 est munie d'une pompe pour la circulation d'eau d'un bain de lavage et/ou de rinçage 3 dans la cuve de lavage 2.

Dans un exemple de réalisation, et de manière nullement limitative, la machine à laver la vaisselle 1 fonctionne de telle sorte à minimiser le bain de lavage et/ou de rinçage retenu dans un puisard 4 ménagé dans la paroi inférieure 2a de la cuve de lavage 2.

La pompe de circulation d'eau 3 puise l'eau du bain de lavage et/ou de rinçage dans le puisard 4 pour mettre en circulation l'eau du bain de lavage et/ou de rinçage sous pression jusqu'aux moyens d'aspersion d'eau 24. Ensuite, le bain de lavage et/ou de rinçage retourne dans le puisard 4.

Cette pompe de circulation d'eau 3 est entraînée par un moteur électrique.

Avantageusement, le puisard 4 ménagé dans la paroi inférieure 2a de la cuve de lavage 2 loge un dispositif de filtration 26 de sorte à filtrer l'eau d'un bain de lavage et/ou de rinçage aspirée par la pompe de circulation d'eau 3 puis mise en circulation jusqu'aux moyens d'aspersion d'eau 24, tel qu'illustré à la figure 11.

La machine à laver la vaisselle 1 peut également comprendre une pompe de vidange 27 de l'eau usée du bain de lavage et/ou de rinçage.

La pompe de vidange 27 puise l'eau usée du bain de lavage et/ou de rinçage dans la cuve de lavage 2, et en particulier dans le puisard 4, pour évacuer l'eau usée du bain de lavage et/ou de rinçage dans un réseau d'eau usée (non représenté) connecté à la machine à laver la vaisselle 1.

Cette pompe de vidange 27 est entraînée par un moteur électrique.

Avantageusement, le dispositif de filtration 26 logé dans le puisard 4 permet de filtrer l'eau d'un bain de lavage et/ou de rinçage aspirée par la pompe de circulation d'eau 3, en particulier lors de l'alimentation en eau des moyens d'aspersion d'eau 24. Et la pompe de vidange 27 permet d'évacuer les salissures prisonnières du dispositif de filtration 26 lors de la mise en circulation de l'eau depuis le puisard 4 jusqu'à un réseau d'eau usée externe.

L'eau d'au moins un bain de lavage et/ou de rinçage contenue dans la cuve de lavage 2, et en particulier dans le puisard 4, peut être chauffée par un moyen de chauffage 20, tel que par exemple une résistance chauffante électrique.

La machine à laver la vaisselle 1 comprend des moyens de commande (non représentés), et notamment au moins un microcontrôleur, permettant de dérouler des cycles de fonctionnement prédéterminés.

Bien entendu, cette machine à laver la vaisselle comporte tous les organes nécessaires (non représentés) au fonctionnement et à l'exécution des cycles de lavage, de rinçage et de séchage de la vaisselle.

La machine à laver 1 comprend un réservoir de stockage d'eau 5 provenant d'au moins une phase de lavage et/ou de rinçage et/ou de séchage pour une réutilisation au cours d'une phase suivante d'un cycle de fonctionnement ou pendant un cycle de fonctionnement suivant mis en oeuvre par ladite machine 1.

Préférentiellement, le réservoir d'eau 5 est interne à la carrosserie de la machine à laver 1.

Le réservoir d'eau 5 peut être fixé sur la cuve de lavage 2 et/ou sur la carrosserie de la machine à laver 1, par exemple le long d'une paroi latérale 2b de la cuve de lavage 2.

Avantageusement, le réservoir d'eau 5 comprend au moins une première et une deuxième ouvertures de passage d'eau 6, 7.

La machine à laver 1 comprend un circuit hydraulique de distribution d'eau, où le circuit hydraulique de distribution d'eau relie la cuve de lavage 2 de la machine à laver au réservoir d'eau 5.

La machine à laver 1 peut comprendre une alimentation en eau du réseau (non représentée) de sorte à remplir la cuve de lavage 2 lors des différentes phases d'un cycle de lavage avec de l'eau n'ayant pas été utilisée lors d'une phase précédente du cycle de fonctionnement en cours ou lors d'un cycle de fonctionnement précédent.

Le circuit hydraulique de distribution d'eau de la machine à laver 1 peut être alimenté en eau du réseau par une conduite d'arrivée d'eau du réseau (non représentée) reliée directement à la machine à laver 1 depuis un réseau d'eau externe au moyen d'une électrovanne permettant de réguler la quantité d'eau nécessaire au fonctionnement de la machine à laver 1.

Le circuit hydraulique de distribution d'eau de la machine à laver 1 relie la cuve de lavage 2 au réservoir d'eau 5.

Le circuit hydraulique de distribution d'eau comprend une pompe de récupération d'eau 8 de sorte à remplir en eau de lavage et/ou de rinçage au moins un compartiment interne 11, 16 de stockage d'eau du réservoir d'eau 5 depuis un puisard 4 de la cuve de lavage 2.

Préférentiellement, le réservoir d'eau 5 est connecté au puisard 4 ménagé dans la paroi inférieure 2a de la cuve de lavage 2 au moyen de la pompe de récupération d'eau 8.

Ainsi, la pompe de récupération d'eau 8 est reliée de manière fluidique d'une part au puisard 4 et d'autre part au réservoir d'eau 5.

De cette manière, la machine à laver 1 pourvue d'un réservoir d'eau 5 permet de récupérer de l'eau d'au moins une phase de lavage et/ou de rinçage, de stocker au moins une partie de cette eau, puis de réutiliser au moins une partie de cette eau au cours d'une phase suivante d'un cycle de fonctionnement ou pendant un cycle de fonctionnement suivant mis en oeuvre par ladite machine à laver 1.

Le réservoir d'eau 5 de la machine à laver 1 permet de stocker tout ou partie de l'eau d'au moins une phase de lavage et/ou de rinçage de sorte à réduire d'autant la consommation d'eau d'un cycle de fonctionnement mis en oeuvre par ladite machine à laver 1.

Avantageusement, une vanne 9 est disposée entre la pompe de récupération d'eau 8 et le réservoir d'eau 5.

Ainsi, lors du remplissage en eau de lavage et/ou de rinçage du réservoir d'eau 5 depuis la cuve de lavage 2, la pompe de récupération d'eau 8 est mise en fonctionnement et la vanne 9 est activée en position ouverte de sorte à mettre en circulation l'eau depuis le puisard 4 vers le réservoir d'eau 5.

A la fin du remplissage en eau de lavage et/ou de rinçage du réservoir d'eau 5 depuis la cuve de lavage 2, la vanne 9 est activée en position fermée de sorte à retenir l'eau à l'intérieur du réservoir d'eau 5 et à éviter un retour d'eau dans le puisard 4.

Le remplissage en eau du réservoir d'eau 5 est assuré par la mise en fonctionnement de la pompe de récupération d'eau 8, de l'activation en position ouverte de la vanne 9 et réalisé au travers d'une première ouverture de passage d'eau 6 ménagée en partie inférieure du réservoir d'eau 5.

Le remplissage en eau du réservoir d'eau 5 peut être réalisé de manière chronométrique. Ce mode de remplissage en eau chronométrique du réservoir d'eau 5 est contrôlé par une période de temps de mise en fonctionnement de la pompe de récupération d'eau 8 et d'ouverture de la vanne 9 au travers des moyens de commande de la machine à laver 1, tel que par exemple un microcontrôleur.

La période de temps de mise en fonctionnement de la pompe de récupération d'eau 8 est dépendante du débit d'eau de ladite pompe 8 et de la contenance du réservoir d'eau 5.

A la fin du remplissage en eau du réservoir d'eau 5, via les moyens de commande de la machine à laver 1, tel que par exemple un microcontrôleur, la vanne 9 montée dans le circuit hydraulique de distribution d'eau entre la pompe de récupération d'eau 8 et le réservoir d'eau 5 est fermée, puis la pompe de récupération d'eau 8 est arrêtée.

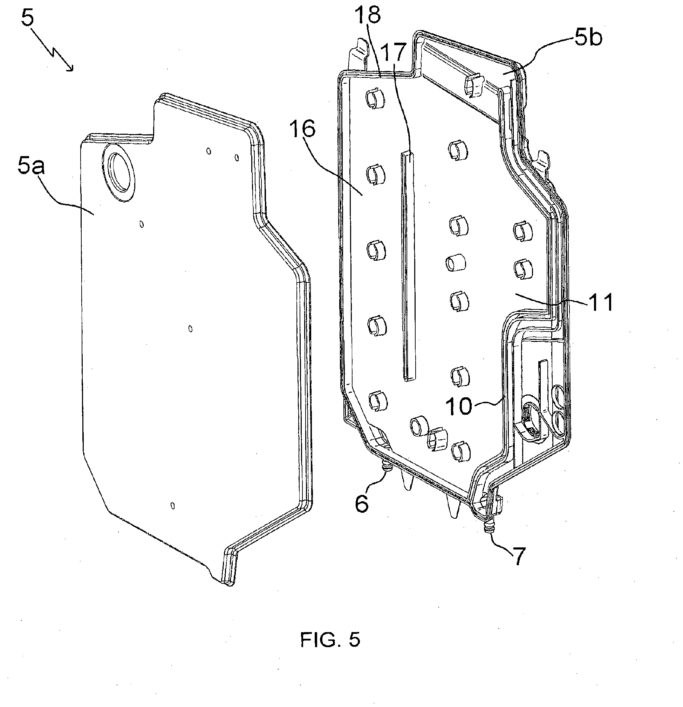

Avantageusement, le réservoir d'eau 5 comprend au moins une première canalisation interne 10 en communication fluidique avec d'une part au moins un compartiment interne 11 du réservoir d'eau 5 et d'autre part avec le puisard 4 de sorte à réaliser un dispositif de trop plein et de déversement de l'eau en excès du réservoir d'eau 5 dans le puisard 4, tel qu'illustré aux figures 5 à 9.

Dans la suite de la description, ladite au moins une première canalisation interne 10 est également appelée conduite de trop plein.

Le déversement de l'eau en excès du réservoir d'eau 5 dans le puisard 4 est réalisé au travers d'une première canalisation interne 10 du réservoir d'eau 5 s'étendant suivant la hauteur de celui-ci, en particulier ladite première canalisation interne 10 comprenant une ouverture de passage d'eau 12 disposée en partie supérieure dudit réservoir d'eau 5, et une deuxième ouverture de passage d'eau 7 ménagée en partie inférieure du réservoir d'eau 5.

Et, lors de la vidange en eau de lavage et/ou de rinçage du réservoir d'eau 5 vers la cuve de lavage 2, la pompe de récupération d'eau 8 est maintenue à l'arrêt et la vanne 9 est activée en position ouverte de sorte à mettre en circulation l'eau par gravité depuis le réservoir d'eau 5 vers le puisard 4.

Ainsi, la pompe de récupération d'eau 8 étant à l'arrêt est adaptée à laisser passer un flux d'eau au travers de celle-ci lorsque la vanne 9 est en position ouverte de sorte à ne pas bloquer la circulation d'eau par gravité au travers du circuit hydraulique de distribution d'eau de la machine à laver 1 depuis le réservoir d'eau 5 vers le puisard 4.

La vanne 9 située entre la pompe de récupération d'eau 8 et le réservoir d'eau 5 peut être commandée électriquement ou encore par la pression dans le circuit hydraulique de distribution d'eau.

La vidange en eau du réservoir d'eau 5 est réalisée par gravité au travers de la pompe de récupération d'eau 8 maintenue à l'arrêt, de la vanne 9 activée en position ouverte et de la première ouverture de passage d'eau 6 ménagée en partie inférieure du réservoir d'eau 5.

La vidange en eau du réservoir d'eau 5 vers la cuve de lavage 2 est mise en oeuvre par des moyens de commande de la machine à laver 1, tel que par exemple un microcontrôleur, commandant l'ouverture de la vanne 9 et le maintien à l'arrêt de la pompe de récupération d'eau 8 de sorte à permettre un écoulement d'eau par gravité depuis le réservoir d'eau 5 jusque dans la cuve de lavage 2, et en particulier dans le puisard 4, au travers d'une pluralité de conduites de circulation d'eau 13a, 13b, 13c, de la pompe de récupération d'eau 8 et de la vanne 9.

Ainsi, la vidange en eau du réservoir d'eau 5 vers le puisard 4 est gravitaire et ne nécessite aucun entraînement de l'eau par une pompe.

La vidange en eau du réservoir d'eau 5 est mise en oeuvre par l'activation en position ouverte de la vanne 9 pendant une durée prédéterminée de sorte que l'eau du réservoir d'eau 5 s'écoule par gravité dans le puisard 4 lorsque la pompe de récupération d'eau 8 est maintenue à l'arrêt.

La durée prédéterminée d'ouverture de la vanne 9, lors de la vidange en eau du réservoir d'eau 5, est contrôlée par des moyens de commande de la machine à laver 1, tel que par exemple par un microcontrôleur.

La vidange en eau du réservoir d'eau 5 est contrôlée par des moyens de commandes préprogrammés de la machine à laver 1 lors de la récupération d'eau pour une phase suivante d'un cycle de fonctionnement et/ou pour un cycle de fonctionnement suivant de ladite machine 1.

Avantageusement, l'eau de lavage et/ou de rinçage est alimentée dans le réservoir d'eau 5 puis stockée à l'intérieur du réservoir d'eau 5 à la fin d'un cycle de fonctionnement précédent mis en oeuvre par la machine à laver 1, en particulier suite à une étape de rinçage. Puis, l'eau de lavage et/ou de rinçage stockée dans le réservoir d'eau 5 est vidangée dans le puisard 4 au départ d'un cycle de fonctionnement suivant mis en oeuvre par la machine à laver 1, en particulier lors d'une étape de lavage ou de prélavage.

Dans un mode de réalisation préféré, une quantité d'eau supplémentaire provenant d'un réseau d'eau externe est alimentée dans le puisard 4 suite à la vidange en eau du réservoir d'eau 5 dans le puisard 4. Ce remplissage en eau supplémentaire est mis en oeuvre au moyen de la vanne (non représentée) connectant la machine à laver 1 à un réseau d'eau externe.

La vidange en eau du réservoir d'eau 5 peut être également commandée par un utilisateur ou par des moyens de commande de la machine à laver 1 de sorte à évacuer l'eau du réservoir d'eau 5 vers un réseau d'eau usée, notamment avant ou après une période prolongée de non utilisation de ladite machine 1.

Lors de l'évacuation de l'eau du réservoir d'eau 5 vers un réseau d'eau usée :
- une première phase de vidange en eau du réservoir d'eau 5 est mise en oeuvre par l'ouverture de la vanne 9 pendant une durée prédéterminée de sorte que l'eau dudit réservoir d'eau 5 s'écoule par gravité dans le puisard 4 tout en maintenant à l'arrêt la pompe de récupération d'eau 8 ; puis
- une deuxième phase d'évacuation en eau depuis le puisard 4 vers un réseau d'eau usée par la mise en fonctionnement de la pompe de vidange 27.

La première ouverture de passage d'eau 6 ménagée en partie inférieure du réservoir d'eau 5 sert d'une part à remplir en eau ledit réservoir d'eau 5 et d'autre part à vidanger ledit réservoir d'eau 5.

Préférentiellement, la première ouverture de passage d'eau 6 du réservoir d'eau 5 est reliée de manière fluidique à la vanne 9 et située au-dessus du niveau d'eau maximum dans la cuve de lavage 2 lorsque l'eau du bain de lavage et/ou de rinçage à l'intérieur de la cuve de lavage 2 est statique.

Avantageusement, la pompe de récupération d'eau 8 est une pompe centrifuge.

La spécificité des pompes centrifuges consiste en ce qu'elles permettent le passage d'un flux d'eau à l'intérieur de leur corps lorsqu'elles ne sont pas mises en fonctionnement.

Ici, la pompe de récupération d'eau 8 est située en dessous du réservoir d'eau 5.

Ainsi, la pompe de récupération d'eau 8 permet de remplir en eau de lavage et/ou de rinçage le réservoir d'eau 5 depuis la cuve de lavage 2.

Le positionnement de la pompe de récupération d'eau 8 étant une pompe centrifuge est également lié à sa conception puisque cette pompe de récupération d'eau 8 ne peut fonctionner qu'en étant gavée d'eau.

Par ailleurs, le positionnement de la pompe de récupération d'eau 8 en dessous du réservoir d'eau 5 est également lié à l'espace disponible à l'intérieur de la carrosserie de la machine à laver 1 de sorte à optimiser les dimensions de la cuve de lavage 2 de la machine à laver 1 et du réservoir d'eau 5.

Pratiquement, le puisard 4 est relié à la pompe de récupération d'eau 8 par une première conduite de circulation d'eau 13a. La pompe de récupération d'eau 8 est reliée à la vanne 9 par une deuxième conduite de circulation d'eau 13b. Et la vanne 9 est reliée au réservoir d'eau 5 par une troisième conduite de circulation d'eau 13c.

Ici, le puisard 4 comprend une première ouverture de passage d'eau 14 connectée à la première conduite de circulation d'eau 13a de sorte à mettre en circulation l'eau depuis la cuve de lavage 2 vers le réservoir d'eau 5, et inversement. Le puisard 4 comprend également une deuxième ouverture d'entrée d'eau 15 connectée à une quatrième conduite de circulation d'eau 13d de sorte à déverser l'excès d'eau introduit dans le réservoir d'eau 5 vers le puisard 4. La quatrième conduite de circulation d'eau 13d est également connectée à la deuxième ouverture de passage d'eau 7 ménagée en partie inférieure du réservoir d'eau 5.

Le puisard 4 ménagé en partie inférieure de la cuve de lavage 2 comprend également une ouverture de passage d'eau 30 vers la pompe de circulation d'eau 3 et une ouverture de passage d'eau vers la pompe de vidange 27.

La pompe de circulation d'eau 3 est reliée en entrée à une cinquième conduite de circulation d'eau avec le puisard 4, et en sortie à au moins une conduite de circulation d'eau avec un ou plusieurs moyens d'aspersion d'eau 24 disposés dans la cuve de lavage 2.

La pompe de vidange 27 est reliée en entrée à une sixième conduite de circulation d'eau avec le puisard 4, et en sortie à une conduite de circulation d'eau avec un réseau d'eau usée.

Le circuit hydraulique de distribution d'eau de la machine à laver 1 comprend une première branche. La première branche comprend une pompe de circulation d'eau 3 de sorte à alimenter en eau au moins un moyen d'aspersion d'eau 24 disposé dans la cuve de lavage 2.

Le circuit hydraulique de distribution d'eau de la machine à laver 1 comprend également une deuxième branche. La deuxième branche comprend la pompe de récupération d'eau 8 de sorte à alimenter en eau au moins une zone de stockage d'eau du réservoir d'eau 5 lors de la récupération d'eau provenant d'au moins une phase de lavage et/ou de rinçage. La deuxième branche comprend également une vanne 9 de sorte à empêcher un écoulement d'eau depuis le réservoir d'eau 5 vers la cuve de lavage 2 au travers d'une ouverture de passage d'eau 6 ménagée dans le réservoir d'eau 5 suite à l'alimentation en eau du réservoir d'eau 5, et de sorte à permettre un écoulement d'eau depuis le réservoir d'eau 5 vers la cuve de lavage 2 au travers de l'ouverture de passage d'eau 6 ménagée dans le réservoir d'eau 5 lors de la vidange du réservoir d'eau 5 vers la cuve de lavage 2.

La vanne 9 de la deuxième branche du circuit hydraulique de distribution d'eau est activée en position ouverte lors de la récupération d'eau provenant d'au moins une phase de lavage et/ou de rinçage de sorte à permettre un écoulement d'eau depuis la cuve de lavage 2 vers le réservoir d'eau 5.

Et la deuxième branche du circuit hydraulique de distribution d'eau relie la cuve de lavage 2 à une paroi inférieure du réservoir d'eau 5.

Ainsi, un flux d'eau de lavage et/ou de rinçage entrant en partie inférieure du réservoir d'eau 5 lors de l'alimentation en eau du réservoir d'eau 5 depuis la cuve de lavage 2 permet de limiter les bruits d'écoulement d'eau lors du remplissage en eau du réservoir d'eau 5.

En outre, le circuit hydraulique de distribution d'eau de la machine à laver 1 est simplifié tout en séparant les première et deuxième branches de ce circuit hydraulique de distribution d'eau.

La vanne 9 disposée dans la deuxième branche du circuit hydraulique permet d'empêcher un écoulement d'eau depuis le réservoir d'eau 5 vers la cuve de lavage 2 au travers d'une ouverture de passage d'eau 6 ménagée en partie inférieure du réservoir d'eau 5 suite à l'alimentation en eau du réservoir d'eau 5, de mettre en circulation un écoulement d'eau depuis le réservoir d'eau 5 vers la cuve de lavage 2 au travers de l'ouverture de passage d'eau 6 ménagée en partie inférieure du réservoir d'eau 5 lors de la vidange du réservoir d'eau 5 vers la cuve de lavage 2, et de mettre en circulation un écoulement d'eau depuis la cuve de lavage 2 vers le réservoir d'eau 5 au travers de l'ouverture de passage d'eau 6 ménagée en partie inférieure du réservoir d'eau 5 lors de la récupération d'eau provenant d'au moins une phase de lavage et/ou de rinçage.

Par ailleurs, la deuxième branche du circuit hydraulique permet de mettre en circulation l'eau de lavage et/ou de rinçage depuis la cuve de lavage 2 vers le réservoir d'eau 5 lors du remplissage en eau du réservoir d'eau 5 au moyen de la pompe de récupération d'eau 8 et en activant la vanne 9 en position ouverte, et de mettre en circulation l'eau de lavage et/ou de rinçage depuis le réservoir d'eau 5 vers la cuve de lavage 2 lors de la vidange en eau du réservoir d'eau 5 par gravité en activant la vanne 9 en position ouverte et en maintenant à l'arrêt la pompe de récupération d'eau 8.

De cette manière, la deuxième branche du circuit hydraulique s'étend depuis la cuve de lavage 2 jusqu'à la paroi inférieure du réservoir d'eau 5 de sorte à minimiser la longueur des conduites de circulation d'eau 13a, 13b, 13c reliant la cuve de lavage 2, la pompe de récupération d'eau 8, la vanne 9 et le réservoir d'eau 5, et de sorte à réduire le coût d'obtention de la machine à laver 1.

La deuxième branche du circuit hydraulique de distribution d'eau de la machine à laver 1 permet un écoulement d'eau dans une direction depuis le puisard 4 de la cuve de lavage 2 vers le réservoir d'eau 5 au travers de la vanne 9 et de la pompe de récupération d'eau 8, et dans une autre direction depuis le réservoir d'eau 5 vers le puisard 4 de la cuve de lavage 2 au travers de la vanne 9 et de la pompe de récupération d'eau 8.

De cette manière, dans le cas où une zone de la deuxième branche du circuit hydraulique est obstruée par un objet solide, par exemple un déchet entraîné par l'écoulement d'eau, lors d'un écoulement d'eau dans une première direction, un écoulement d'eau dans une deuxième direction au travers de la deuxième branche du circuit hydraulique peut permettre d'entraîner l'objet solide bloqué dans la zone de la deuxième branche du circuit hydraulique.

Avantageusement, le réservoir d'eau 5 comprend une conduite de trop plein 10 ménagée à l'intérieur du réservoir d'eau 5 et mise en communication fluidique d'une part avec ladite au moins une zone de stockage d'eau du réservoir d'eau 5 et d'autre part avec le puisard 4 de la cuve de lavage 2.

Ainsi, une telle machine à laver 1 ayant un réservoir d'eau de lavage et/ou de rinçage 5 où le circuit hydraulique de distribution d'eau de la machine à laver 1 comprend une conduite de trop plein 10 ménagée à l'intérieur du réservoir d'eau 5 et mise en communication fluidique avec le puisard 4 de la cuve de lavage 2 permet de s'affranchir d'un capteur de niveau d'eau monté sur le réservoir d'eau 5 détectant le niveau haut d'eau à l'intérieur du réservoir d'eau 5.

De cette manière, le remplissage en eau de lavage et/ou de rinçage du réservoir d'eau 5 depuis la cuve de lavage 2 de la machine à laver 1 s'effectue en activant la pompe de récupération d'eau 8 sans contrôler le niveau d'eau à l'intérieur du réservoir d'eau 5.

Dans le cas où la quantité d'eau de lavage et/ou de rinçage présente dans la cuve de lavage 2 de la machine à laver 1 est supérieure à la contenance du réservoir d'eau 5, le surplus d'eau est retourné dans le puisard 4 de la cuve de lavage 2 au moyen de la conduite de trop plein 10 ménagée à l'intérieur du réservoir d'eau 5.

En outre, une telle machine à laver 1 ayant un réservoir d'eau de lavage et/ou de rinçage 5 est moins onéreuse et plus simple à assembler tout en évitant d'arroser les pièces de vaisselle contenues à l'intérieur de la cuve de lavage 2 par l'eau introduite en excès dans le réservoir d'eau 5 et retournée depuis le réservoir d'eau 5 vers la cuve de lavage 2.

Préférentiellement, la deuxième branche du circuit hydraulique de distribution d'eau comprend une pluralité de conduites de circulation d'eau 13a, 13b, 13c reliant le puisard 4 de la cuve de lavage 2 au réservoir d'eau 5, et la conduite de trop plein 10 du réservoir d'eau 5 est reliée au puisard 4 de la cuve de lavage 2 par une autre conduite de circulation d'eau 13d de sorte à déverser un excès d'eau introduit dans le réservoir d'eau 5 vers le puisard 4 de la cuve de lavage 2, ladite autre conduite de circulation d'eau 13d reliant la conduite de trop plein 10 du réservoir d'eau 5 au puisard 4 de la cuve de lavage 2 est séparée de la pluralité de conduites de circulation d'eau 13a, 13b, 13c de la deuxième branche du circuit hydraulique de distribution d'eau.

Ainsi, lors de l'alimentation en eau du réservoir d'eau 5 depuis la cuve de lavage 2, un flux d'eau de lavage et/ou de rinçage entre en partie inférieure du réservoir d'eau 5 jusqu'au niveau d'une ouverture de passage d'eau 12 de la conduite de trop plein 10. Puis, l'eau introduite en excès dans le réservoir d'eau 5 est retournée depuis le réservoir d'eau 5 vers la cuve de lavage 2 au moyen de la conduite de circulation d'eau 13d reliant la conduite de trop plein 10 du réservoir d'eau 5 au puisard 4 de la cuve de lavage 2 et étant séparée de la pluralité de conduites de circulation d'eau 13a, 13b, 13c de la deuxième branche du circuit hydraulique de distribution d'eau.

Ici, le circuit hydraulique de distribution d'eau comprend une troisième branche. La troisième branche comprend une pompe de vidange 27 de sorte à évacuer de l'eau depuis la cuve de lavage 2 et/ou depuis le réservoir d'eau 5 vers un réseau d'eau usée.

Le circuit hydraulique de distribution d'eau de la machine à laver 1 exploite la première branche comprenant la pompe de circulation d'eau 3 pour alimenter en eau au moins un moyen d'aspersion d'eau 24 disposé dans la cuve de lavage 2, la deuxième branche comprenant la pompe de récupération d'eau 8 et la vanne 9 pour alimenter en eau le réservoir d'eau 5 lors de la récupération d'eau provenant d'au moins une phase de lavage et/ou de rinçage et pour vidanger en eau le réservoir d'eau 5 vers le puisard 4 de la cuve de lavage 2 lors de la réutilisation de l'eau stockée ou lors de la vidange de l'eau stockée vers un réseau d'eau usée externe, et la troisième branche comprenant la pompe de vidange 27 pour évacuer l'eau retenue dans le puisard 4 et/ou stockée dans le réservoir d'eau 5 vers un réseau d'eau usée externe.

Les première, deuxième et troisième branches du circuit hydraulique de distribution d'eau sont séparées les unes des autres.

Les première, deuxième et troisième branches du circuit hydraulique de distribution d'eau sont uniquement reliées par le puisard 4 de la cuve de lavage 2.

De cette manière, le dispositif de récupération d'eau provenant d'au moins une phase de lavage et/ou de rinçage comprenant le réservoir d'eau 5, la pompe de récupération d'eau 8 et la vanne 9 peut être désactivé ou activé au travers des moyens de commande de la machine à laver 1, et notamment d'un microcontrôleur, de sorte à désactiver ou activer la récupération d'eau de lavage et/ou de rinçage.

Le circuit hydraulique de distribution d'eau d'une machine à laver 1 permet d'adapter les cycles de fonctionnement de ladite machine à laver 1 en fonction de l'utilisation ou non du réservoir d'eau 5 avec ladite machine à laver 1.

En outre, le circuit hydraulique de distribution d'eau d'une machine à laver la vaisselle conforme à l'invention est adapté à être implanté sur une machine à laver la vaisselle dépourvue d'un réservoir d'eau sans modifier les première et troisième branches du circuit hydraulique de distribution d'eau de la machine à laver la vaisselle.

Le circuit hydraulique de distribution d'eau d'une telle machine à laver 1 comprend une première branche configurée pour alimenter des moyens d'aspersion d'eau 24 de la cuve de lavage 2 de sorte à nettoyer les pièces de vaisselle disposées dans des paniers à vaisselle de la cuve de lavage 2, et une deuxième branche indépendante configurée pour alimenter et vidanger en eau un réservoir d'eau 5 de sorte à récupérer l'eau de lavage et/ou de rinçage d'une phase d'un cycle de fonctionnement et à réutiliser cette eau récupérée au cours d'une phase suivante d'un cycle de fonctionnement ou lors d'un cycle de fonctionnement suivant.

Ainsi, le circuit hydraulique de distribution d'eau d'une telle machine à laver 1 peut être équipé ou non d'un moyen de répartition d'eau configuré pour alimenter en eau des moyens d'aspersion d'eau 24 de la cuve de lavage 2, tel que par exemple un répartiteur d'eau avec disque rotatif.

Dans le cas d'une machine à laver 1 ayant un circuit hydraulique de distribution d'eau comprenant un moyen de répartition d'eau, le moyen de répartition d'eau alimente en eau des moyens d'aspersion d'eau 24 soit alternativement soit simultanément.

Dans le cas d'une machine à laver 1 ayant un circuit hydraulique de distribution d'eau dépourvu d'un moyen de répartition d'eau, l'alimentation en eau des moyens d'aspersion d'eau 24 peut être réalisée par une conduite de circulation d'eau comprenant une entrée d'eau connectée en sortie de la pompe de circulation d'eau 3 et une pluralité de sorties d'eau connectées respectivement à un moyen d'aspersion d'eau 24.

Lors du remplissage en eau de lavage et/ou de rinçage du réservoir d'eau 5, le réservoir d'eau 5 est alimenté en eau au travers de la deuxième branche du circuit hydraulique de distribution d'eau comprenant une pluralité de conduites de circulation d'eau 13a, 13b, 13c reliant de manière fluidique le puisard 4, la pompe de récupération d'eau 8, la vanne 9 et le réservoir d'eau 5 de sorte que ladite pompe de récupération d'eau 8 alimente en eau de lavage et/ou de rinçage uniquement ledit réservoir d'eau 5.

Lors de la vidange d'eau de lavage et/ou de rinçage du réservoir d'eau 5, le réservoir d'eau 5 est vidé de l'eau au travers de la deuxième branche du circuit hydraulique de distribution d'eau en sens inverse, où la pompe de récupération d'eau 8 est à l'arrêt de sorte à laisser passer un flux d'eau dès l'ouverture de la vanne 9 montée sur la deuxième branche du circuit hydraulique de distribution d'eau.

Le réservoir d'eau 5 comprend un dispositif de mise à l'air de sorte à permettre le remplissage en eau et la vidange en eau du réservoir d'eau 5.

Le dispositif de mise à l'air du réservoir d'eau 5 comprend une première ouverture de passage d'air 22 disposée au-dessus d'une ouverture de passage d'eau 12 de la conduite de trop plein 10 ménagée à l'intérieur du réservoir d'eau 5.

Et le réservoir d'eau 5 comprend une deuxième ouverture de passage d'air 19 reliée à un dispositif de mise à l'air de la cuve de lavage 2, où les première et deuxième ouvertures de passage d'air 22, 19 sont en communication fluidique.

Ainsi, le réservoir d'eau 5 comprend une conduite de trop plein 10 reliant au moins une zone de stockage d'eau du réservoir d'eau 5 avec le puisard 4 de la cuve de lavage 2 et un dispositif de mise à l'air reliant ladite au moins une zone de stockage d'eau avec la cuve de lavage 2, où la conduite de trop plein 10 et le dispositif de mise à l'air du réservoir d'eau 5 sont séparés et indépendants.

De cette manière, la séparation de la conduite de trop plein 10 et du dispositif de mise à l'air du réservoir d'eau 5 de la machine à laver 1 permet de garantir le bon écoulement d'un flux d'eau introduit en excès depuis le réservoir d'eau 5 vers le puisard 4 de la cuve de lavage 2 ainsi que le bon écoulement d'air entre le réservoir d'eau 5 et un dispositif de mise à l'air de la cuve de lavage 2 lors du remplissage en eau du réservoir d'eau 5 depuis le puisard 4 de la cuve de lavage 2 et lors de la vidange en eau du réservoir d'eau 5 vers le puisard 4 de la cuve de lavage 2.

En outre, la conduite de trop plein 10 du réservoir d'eau 5 permet d'évacuer par gravité un surplus d'eau introduit dans le réservoir d'eau 5 vers le puisard 4 de la cuve de lavage 2 suite au remplissage en eau du réservoir d'eau 5 au-delà du niveau d'eau maximum admissible dans le réservoir d'eau 5.

Pratiquement, au moins une ouverture de passage d'air 19 du dispositif de mise à l'air du réservoir d'eau 5 est reliée à une ouverture de passage d'air 31 de la cuve de lavage 2.

Ici, les première et deuxième ouvertures de passage d'air 22, 19 sont reliées de manière fluidique par une conduite de circulation d'air 21 ménagée à l'intérieur du réservoir d'eau 5.

Ainsi, l'écoulement d'air entre les première et deuxième ouvertures de passage d'air 22, 19 du dispositif de mise à l'air du réservoir d'eau 5 est canalisé au moyen de la conduite de circulation d'air 21 ménagée à l'intérieur du réservoir d'eau 5.

Avantageusement, la conduite de circulation d'air 21 est disposée parallèlement à la conduite de trop plein 10.

Ainsi, le positionnement de la conduite de circulation d'air 21 par rapport à la conduite de trop plein 10 permet de minimiser l'espace occupé à l'intérieur du réservoir d'eau 5 de sorte à optimiser la taille de ladite au moins une zone de stockage d'eau du réservoir d'eau 5 et à maximiser la quantité d'eau stockée dans le réservoir d'eau 5.

Préférentiellement, la conduite de circulation d'air 21 et la conduite de trop plein 10 sont séparées par une cloison 32 commune ménagée à l'intérieur du réservoir d'eau 5.

Ainsi, la conduite de circulation d'air 21 est adjacente à la conduite de trop plein 10 de sorte à réduire le nombre de cloisons à l'intérieur du réservoir d'eau 5.

De cette manière, le coût d'obtention du réservoir d'eau 5 est minimisé et la réalisation de celui-ci est facilitée.

Dans un mode de réalisation, les première et deuxième ouvertures de passage d'air 22, 19 ménagées dans le réservoir d'eau 5 sont en communication fluidique avec au moins une troisième ouverture de passage d'air 33 ménagée dans le réservoir d'eau 5 et débouchant à l'extérieur du réservoir d'eau 5 et de la cuve de lavage 2.

Ainsi, le réservoir d'eau 5 comprend un dispositif de mise à l'air permettant de relier de manière fluidique la cuve de lavage 2, le réservoir d'eau 5 et l'extérieur de la machine à laver 1 de sorte à permettre un écoulement d'air au travers des première, deuxième et troisième ouvertures de passage d'air 22, 19, 33 au cours des différentes étapes d'un cycle de fonctionnement mis en oeuvre par la machine à laver 1.

Ici et de manière nullement limitative, le réservoir d'eau 5 comprend deux troisièmes ouvertures d'air 33. La disposition des deux troisièmes ouvertures d'air 33 dans une paroi du réservoir d'eau 5 permet d'augmenter la section de passage d'air depuis le réservoir d'eau 5 vers l'extérieur de celui-ci et de la cuve de lavage 2 tout en maintenant la rigidité du réservoir d'eau 5.

Avantageusement, ladite au moins une troisième ouverture d'air 33 est de forme circulaire de sorte à boucher facilement celle-ci lors de la vérification en production de l'étanchéité du réservoir d'eau 5.

Pratiquement, la deuxième et ladite au moins une troisième ouvertures de passage d'air 19, 33 sont disposées dans un compartiment interne 34 du réservoir d'eau 5, le compartiment interne 34 du réservoir d'eau 5 étant séparé de ladite au moins une zone de stockage d'eau du réservoir d'eau 5.

Ainsi, la disposition des deuxième et troisième ouvertures de passage d'air 19, 33 dans un compartiment interne 34 du réservoir d'eau 5 permet de séparer ces deuxième et troisième ouvertures de passage d'air 19, 33 de ladite au moins une zone de stockage d'eau du réservoir d'eau 5 de sorte à éviter un écoulement d'eau depuis ladite au moins une zone de stockage d'eau du réservoir d'eau 5 au travers des deuxième et troisième ouvertures de passage d'air 19, 33 reliées respectivement de manière fluidique à la cuve de lavage 2 et à l'extérieur de la cuve de lavage 2 de la machine à laver 1.

En outre, le compartiment interne 34 du réservoir d'eau 5 dans lequel sont disposées les deuxième et troisième ouvertures de passage d'air 19, 33 permet de retenir une quantité d'eau introduite en excès dans le réservoir d'eau 5 et ayant débordée par la première ouverture de passage d'air 22, en particulier au moyen d'au moins une paroi inférieure du compartiment interne 34 disposée en dessous des deuxième et troisième ouvertures de passage d'air 19, 33.

Par ailleurs, ladite au moins une paroi inférieure du compartiment interne 34 disposée en dessous des deuxième et troisième ouvertures de passage d'air 19, 33 permet de retenir des condensas résultant de la circulation d'air chargée en humidité entre la cuve de lavage 2 et le dispositif de mise à l'air du réservoir d'eau 5, dont le compartiment interne 34 du réservoir d'eau 5 fait partie intégrante.

Avantageusement, le réservoir d'eau 5 comprend une paroi de séparation 35 disposée entre la deuxième et ladite au moins une troisième ouvertures de passage d'air 19, 33 de sorte à canaliser un écoulement d'eau introduit au travers de la première ouverture de passage d'air 22 vers la deuxième ouverture de passage d'air 19 suite à un remplissage en eau du réservoir d'eau 5 au-delà de l'ouverture de passage d'eau 12 de la conduite de trop plein 10.

Ainsi, dans le cas où un surplus d'eau est introduit dans le réservoir d'eau 5 au-delà de l'ouverture de passage d'eau 12 de la conduite de trop plein 10 et qu'une quantité d'eau est introduite au travers de la première ouverture de passage d'air 22, cette quantité d'eau peut être retournée dans la cuve de lavage 2 au moyen de la deuxième ouverture de passage d'air 19 ménagée dans le réservoir d'eau 5 et en communication fluidique avec la cuve de lavage 2.

De cette manière, la quantité d'eau introduite au travers de la première ouverture de passage d'air 22 est récupérée dans la cuve de lavage 2 de sorte à éviter un débordement d'eau en dehors de la cuve de lavage 2, et en particulier dans une zone comprenant des organes de la machine à laver 1 alimentés en énergie électrique.

Ici, le réservoir d'eau 5 comprend une paroi de retenue d'eau 36 disposée au moins en partie en dessous de la deuxième ouverture de passage d'air 19 de sorte à canaliser un écoulement d'eau introduit au travers de la première ouverture de passage d'air 22 vers la deuxième ouverture de passage d'air 19, puis vers la cuve de lavage 2 suite à un remplissage en eau du réservoir d'eau 5 au-delà de l'ouverture de passage d'eau 12 de la conduite de trop plein 10.

Ainsi, dans le cas où un surplus d'eau est introduit dans le réservoir d'eau 5 au-delà de l'ouverture de passage d'eau 12 de la conduite de trop plein 10 et qu'une quantité d'eau est introduite au travers de la première ouverture de passage d'air 22, cette quantité d'eau est canalisée par une paroi de retenue d'eau 36 disposée au moins en partie en dessous de la deuxième ouverture de passage d'air 19 de sorte à retourner cette quantité d'eau dans la cuve de lavage 2 au moyen de la deuxième ouverture de passage d'air 19 ménagée dans le réservoir d'eau 5 et en communication fluidique avec la cuve de lavage 2.

Ici, une ouverture de sortie d'air 23 de la conduite de circulation d'air 21 débouche dans le compartiment interne 34 du réservoir d'eau 5, et en particulier entre la paroi de séparation 35 séparant les deuxième et troisième ouvertures de passage d'air 19, 33 et la cloison 32 séparant la conduite de trop plein 10 et la conduite de circulation d'air 21 de sorte à éviter un écoulement d'eau vers ladite au moins une troisième ouverture de passage d'air 33 reliée de manière fluidique à l'extérieur de la cuve de lavage 2 dans le cas où un surplus d'eau est introduit dans le réservoir d'eau 5 au-delà de l'ouverture de passage d'eau 12 de la conduite de trop plein 10 et qu'une quantité d'eau est introduite au travers de la première ouverture de passage d'air 22.

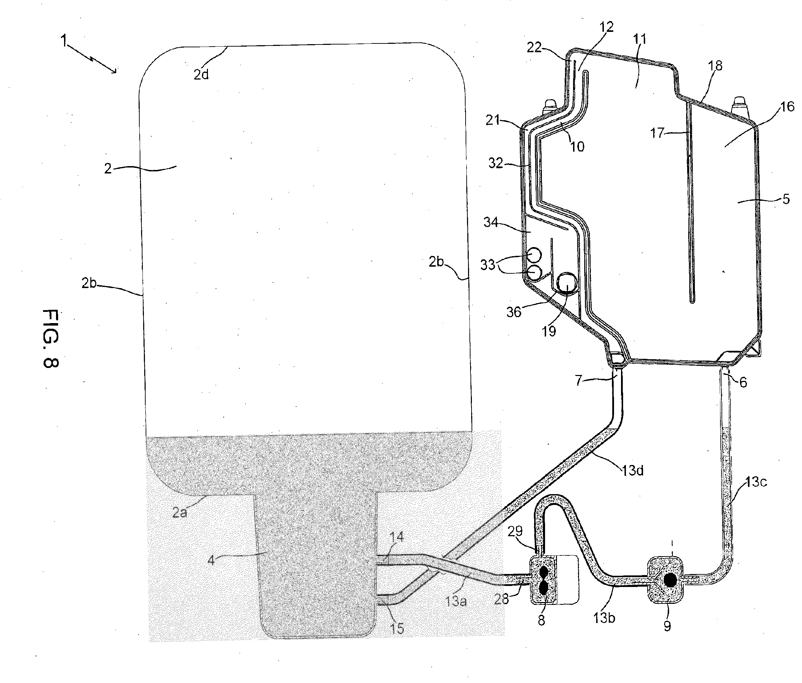

Dans un mode de réalisation tel qu'illustré à la figure 8, le puisard 4 de la cuve de lavage 2 comprend une ouverture d'entrée d'eau 15 reliée de manière fluidique avec la conduite de trop plein 10 ménagée à l'intérieur du réservoir d'eau 5.

Avantageusement, l'eau provenant d'un bain de lavage et/ou de rinçage alimentant le réservoir de stockage d'eau 5 pour une réutilisation pendant un cycle de fonctionnement suivant mis en oeuvre par la machine à laver 1 est de l'eau chauffée, et préférentiellement l'eau du dernier du bain de rinçage, ou encore appelée l'eau du bain de rinçage chaud.

Avantageusement, le circuit hydraulique de distribution d'eau comprend un dispositif de filtration d'eau 26 situé en amont du réservoir d'eau 5 de sorte à alimenter en eau de lavage et/ou de rinçage filtrée le réservoir d'eau 5.

Ici, l'eau alimentant le réservoir d'eau 5 est filtrée par le dispositif de filtration 26 puisque le dispositif de filtration 26 est situé en amont de la pompe de récupération d'eau 8. La pompe de récupération d'eau 8 prélève de l'eau de la cuve de lavage 2, notamment du puisard 4, suite au passage de ladite eau dans le dispositif de filtration 26 pour alimenter en eau le réservoir d'eau 5 de sorte à éviter l'encrassement dudit réservoir d'eau 5 et de la deuxième branche du circuit hydraulique de distribution d'eau.

Dans un mode de réalisation, le dispositif de filtration 26 est logé au moins partiellement à l'intérieur du puisard 4.

Ainsi, le dispositif de filtration 26 logé dans le puisard 4 permet également de filtrer l'eau d'un bain de lavage et/ou de rinçage aspirée par la pompe de récupération d'eau 8 puis mise en circulation jusqu'au réservoir d'eau 5.

Le dispositif de filtration 26 peut comprendre un piège à déchets, un filtre intermédiaire et un micro filtre.

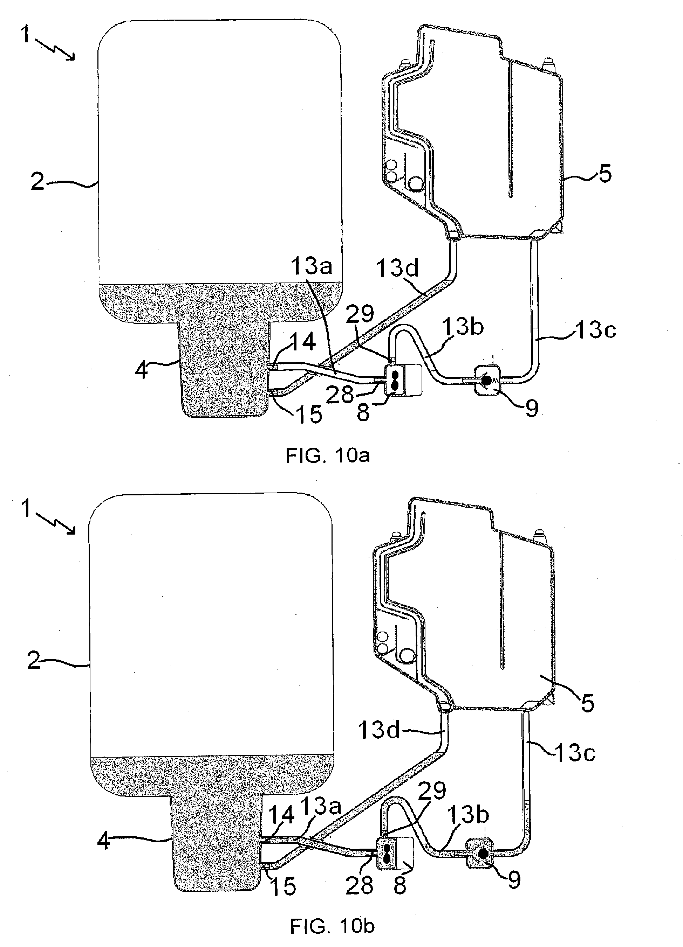

On va décrire à présent, en référence aux figures 10a à 10g, un procédé de commande en fonctionnement d'une machine à laver pour amorcer une pompe de récupération d'eau alimentant en eau de lavage et/ou de rinçage un réservoir d'eau selon un mode de réalisation de l'invention.

Le procédé comprend une étape de remplissage en eau de lavage et/ou de rinçage du réservoir d'eau 5.

L'étape de remplissage en eau comprend :
- une étape d'alimentation en eau de lavage et/ou de rinçage du puisard 4 de la cuve de lavage 2 ;
- une étape d'ouverture de la vanne 9 ;
- une première étape de mise en fonctionnement de la pompe de récupération d'eau 8 de sorte à évacuer une partie de l'eau de lavage et/ou de rinçage depuis le puisard 4 de la cuve de lavage 2 vers le réservoir d'eau 5 ;
- une étape de maintien à l'arrêt de la pompe de récupération d'eau 8 et de maintien en position ouverte de la vanne 9 de sorte à évacuer de l'air emprisonné dans le circuit hydraulique de distribution d'eau entre le puisard 4 de la cuve de lavage 2 et le réservoir d'eau 5 par un écoulement d'eau par gravité vers le puisard 4 de la cuve de lavage 2.

Ainsi, suite à la mise en oeuvre de l'étape de maintien à l'arrêt de la pompe de récupération d'eau 8 et de maintien en position ouverte de la vanne 9, l'air contenu dans la branche du circuit hydraulique de distribution d'eau reliant le puisard 4 de la cuve de lavage 2 au réservoir d'eau 5 au moyen de la pompe de récupération d'eau 8 et de la vanne 9 est évacué vers le puisard 4 de la cuve de lavage 2 au moyen de l'écoulement d'eau circulant par gravité depuis le réservoir d'eau 5 vers le puisard 4 de la cuve de lavage 2 et traversant la vanne 9 et la pompe de récupération d'eau 8.

De cette manière, suite au remplissage en eau du réservoir d'eau 5 jusqu'à un niveau d'eau prédéterminé, la branche du circuit hydraulique de distribution d'eau reliant le puisard 4 de la cuve de lavage 2 au réservoir d'eau 5 au moyen de la pompe de récupération d'eau 8 et de la vanne 9 est vidée de l'air emprisonné entre la puisard 4 de la cuve de lavage 2 et la vanne 9 au moyen de l'écoulement d'eau circulant par gravité depuis le réservoir d'eau 5 vers le puisard 4 de la cuve de lavage 2 et traversant la vanne 9 et la pompe de récupération d'eau 8.

En outre, un tel procédé permet de mettre en fonctionnement une pompe de récupération d'eau 8 alimentant un réservoir d'eau 5 sans ajouter un dispositif de mise à l'air à ladite pompe de récupération d'eau 8.

De cette manière, le coût d'obtention de la machine à laver 1 est réduit.

Lors de la mise en service de la machine à laver 1 et lors d'un cycle de fonctionnement mis en oeuvre par la machine à laver 1 où le réservoir d'eau 5 est vide d'eau, la branche du circuit hydraulique de distribution d'eau reliant le réservoir d'eau 5 au puisard 4 de la cuve de lavage 2 au moyen de la vanne 9 et de la pompe de récupération d'eau 8 est vide d'eau.

Le procédé comprend une première étape correspondant à une étape d'alimentation en eau de lavage et/ou de rinçage du puisard 4 de la cuve de lavage 2.

Avantageusement, l'eau de lavage et/ou de rinçage alimentée dans le puisard 4 de la cuve de lavage 2 est de l'eau utilisée au cours d'une phase d'un cycle de fonctionnement mis en oeuvre par la machine à laver 1, et en particulier d'une phase de rinçage chaud.

L'eau de lavage et/ou de rinçage alimentée dans le puisard 4 de la cuve de lavage 2 est de l'eau provenant d'un réseau d'eau externe.

Pratiquement, au cours de l'étape d'alimentation en eau de lavage et/ou de rinçage du puisard 4 de la cuve de lavage 2, la vanne 9 est maintenue en position fermée, tel qu'illustré à la figure 10a.

Ainsi, l'eau de lavage et/ou de rinçage alimentée dans le puisard 4 de la cuve de lavage 2, et préférentiellement utilisée au cours d'une phase d'un cycle de fonctionnement mis en oeuvre par la machine à laver 1, n'est pas mise en contact avec de l'eau pouvant rester dans le réservoir d'eau 5 de sorte à éviter de polluer ce bain d'eau de lavage et/ou de rinçage au cours de la phase d'un cycle de fonctionnement mis en oeuvre par la machine à laver 1 et à garantir la performance de lavage de la machine à laver.

En outre, lorsque la vanne 9 est une électrovanne, le maintien de la vanne 9 en position fermée, au cours de l'étape d'alimentation en eau du puisard 4 de la cuve de lavage 2, permet de limiter un échauffement de la vanne 9 et donc de prolonger la durée de vie de celle-ci en évitant d'alimenter en énergie électrique une bobine pendant une longue période.

Suite à l'étape d'ouverture de la vanne 9, l'eau de lavage et/ou de rinçage présente dans le puisard 4 de la cuve de lavage 2 peut s'écouler dans la branche du circuit hydraulique de distribution d'eau reliant le puisard 4 de la cuve de lavage 2 au réservoir d'eau 5 au moyen de la pompe de récupération d'eau 8 et de la vanne 9, tel qu'illustré à la figure 10b, en particulier lorsque la branche du circuit hydraulique de distribution d'eau reliant le réservoir d'eau 5 au puisard 4 de la cuve de lavage 2 au moyen de la vanne 9 et de la pompe de récupération d'eau 8 est vide d'eau, ou lorsque le niveau d'eau dans la branche du circuit hydraulique de distribution d'eau reliant le réservoir d'eau 5 au puisard 4 de la cuve de lavage 2 au moyen de la vanne 9 et de la pompe de récupération d'eau 8 est inférieur au niveau d'eau dans le puisard 4 de la cuve de lavage 2.

Ainsi, suite au remplissage en eau du puisard 4 de la cuve de lavage 2 jusqu'à un niveau d'eau prédéterminé et à l'ouverture de la vanne 9, la branche du circuit hydraulique de distribution d'eau reliant le puisard 4 de la cuve de lavage 2 au réservoir d'eau 5 au moyen de la pompe de récupération d'eau 8 et de la vanne 9 est remplie en eau selon le principe des vases communiquant.

Le circuit hydraulique de distribution d'eau de la machine à laver 1 comprend la première conduite de circulation d'eau 13a reliant une première ouverture de passage d'eau 14 du puisard 4 de la cuve de lavage 2 à une ouverture d'entrée d'eau 28 de la pompe de récupération d'eau 8.

Dans un mode de réalisation tel qu'illustré aux figures 10a à 10g, la première conduite de circulation d'eau 13a reliant le puisard 4 de la cuve de lavage 2 à la pompe de récupération d'eau 8 est disposée avec une inclinaison descendante depuis le puisard 4 de la cuve de lavage 2 vers la pompe de récupération d'eau 8.

Ainsi, suite à l'étape d'ouverture de la vanne 9, au moins une bulle d'air peut être bloquée entre le puisard 4 de la cuve de lavage 2 et la pompe de récupération d'eau 8.

Préférentiellement, une ouverture de sortie d'eau 29 de la pompe de récupération d'eau 8 est reliée à une vanne 9 par une deuxième conduite de circulation d'eau 13b.

Ainsi, la vanne 9 permet de bloquer une deuxième branche du circuit hydraulique de distribution d'eau de la machine à laver 1 reliant le puisard 4 de la cuve de lavage 2 au réservoir d'eau 5 en fonction de conditions de fonctionnement de la machine à laver 1, par exemple suite au remplissage en eau de lavage et/ou de rinçage du réservoir d'eau 5 depuis le puisard 4 de la cuve de lavage 2, ou encore lors du remplissage du puisard 4 de la cuve de lavage 2 en eau du réseau.

Avantageusement, l'ouverture de sortie d'eau 29 de la pompe de récupération d'eau 8 est ménagée en partie supérieure du corps de la pompe de récupération d'eau 8.

Dans un mode de réalisation tel qu'illustré aux figures 10a à 10g, l'ouverture de sortie d'eau 29 de la pompe de récupération d'eau 8 est reliée à la vanne 9 par la deuxième conduite de circulation d'eau 13b, où la deuxième conduite de circulation d'eau 13b comprend une première partie ascendante et une deuxième partie descendante depuis la pompe de récupération d'eau 8 vers la vanne 9.

Ainsi, suite à l'étape d'ouverture de la vanne 9, un tampon d'air peut être bloqué entre la pompe de récupération d'eau 8 et la vanne 9.

En outre, la forme coudée vers le haut de la deuxième conduite de circulation d'eau 13b permet de faciliter l'évacuation d'air emprisonné à l'intérieur du corps de la pompe de récupération d'eau 8 lors de la mise en fonctionnement de celle-ci générant un flux d'eau en direction de la vanne 9 et du réservoir d'eau 5 et entraînant des bulles d'air vers le haut et au travers de l'ouverture de sortie d'eau 29 de la pompe de récupération d'eau 8.

Préférentiellement, la première partie ascendante de la deuxième conduite de circulation d'eau 13b reliant la pompe de récupération d'eau 8 à la vanne 9 est disposée verticalement.

Ici, la deuxième conduite de circulation d'eau 13b reliant la pompe de récupération d'eau 8 à la vanne 9 présente une forme en U renversé. La deuxième conduite de circulation d'eau 13b reliant la pompe de récupération d'eau 8 à la vanne 9 comprend une deuxième partie descendante depuis la pompe de récupération d'eau 8 vers la vanne 9 après la première partie ascendante de celle-ci.

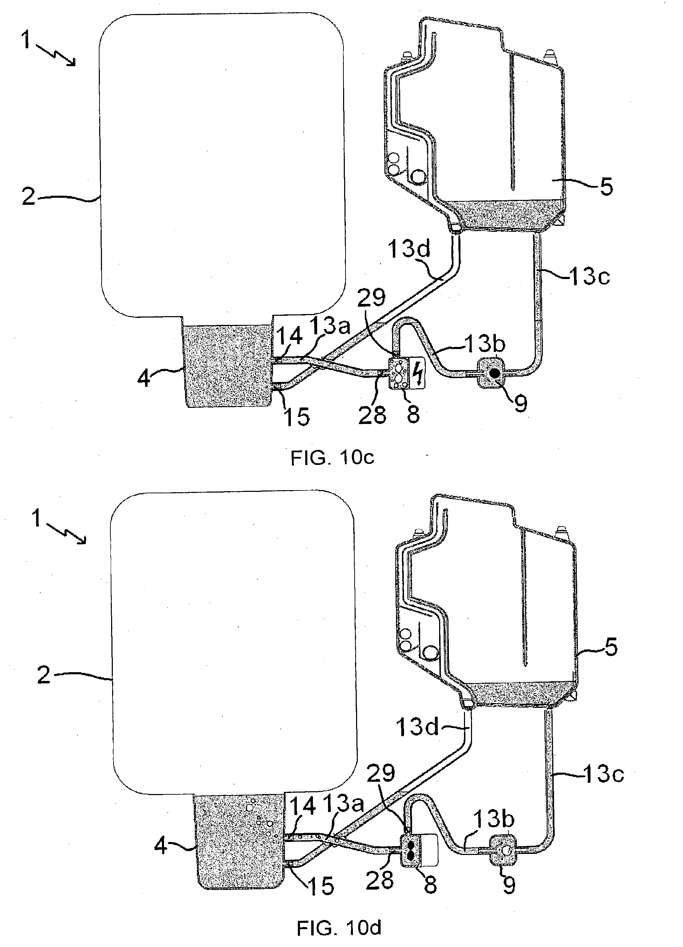

Suite à l'étape d'ouverture de la vanne 9, le procédé met en oeuvre une première étape de mise en fonctionnement de la pompe de récupération d'eau 8 de sorte à évacuer une partie de l'eau de lavage et/ou de rinçage depuis le puisard 4 de la cuve de lavage 2 vers le réservoir d'eau 5, tel qu'illustré à la figure 10c.

Avantageusement, la vanne 9 est activée en position ouverte avant la première mise en fonctionnement de la pompe de récupération d'eau 8.

Ainsi, le tampon d'air bloqué entre la pompe de récupération d'eau 8 et la vanne 9 est évacué en aval de la vanne 9 suite à la mise en fonctionnement de la pompe de récupération d'eau 8 de sorte à pouvoir évacuer le tampon d'air dans le réservoir d'eau 5.

En outre, ladite au moins une bulle d'air bloquée entre le puisard 4 de la cuve de lavage 2 et la pompe de récupération d'eau 8 est aspirée à l'intérieur de la pompe de récupération d'eau 8 et reste à l'intérieur de celle-ci.

Par conséquent, ladite au moins une bulle d'air poussée à l'intérieur de la pompe de récupération d'eau 8 engendre une diminution de la puissance de la pompe de récupération d'eau 8.

Avantageusement, au cours de la première étape de mise en fonctionnement de la pompe de récupération d'eau 8, la pompe de récupération d'eau 8 est mise en fonctionnement pendant une durée prédéterminée.

Ici, la pompe de récupération d'eau 8 est mise en fonctionnement pendant une durée de l'ordre de quinze secondes.

Bien entendu, la durée de mise en fonctionnement de la pompe de récupération d'eau au cours de la première étape de mise en fonctionnement de la pompe de récupération d'eau n'est nullement limitative, et peut être différente.

Suite à la première étape de mise en fonctionnement de la pompe de récupération d'eau 8, le procédé comprend une étape de maintien à l'arrêt de la pompe de récupération d'eau 8 et de maintien en position ouverte de la vanne 9, tel qu'illustré à la figure 10d.

Ainsi, lors de la mise en oeuvre de l'étape de maintien à l'arrêt de la pompe de récupération d'eau 8 et de maintien en position ouverte de la vanne 9, ladite au moins une bulle d'air bloquée à l'intérieur de la pompe de récupération d'eau 8 est évacuée vers le puisard 4 de la cuve de lavage 2 au moyen de l'écoulement d'eau circulant par gravité depuis le réservoir d'eau 5 vers le puisard 4 de la cuve de lavage 2 et traversant la vanne 9 et la pompe de récupération d'eau 8.

De cette manière, la branche du circuit hydraulique de distribution d'eau reliant le puisard 4 de la cuve de lavage 2 au réservoir d'eau 5 au moyen de la pompe de récupération d'eau 8 et de la vanne 9 est vidée de l'air introduit dans celle-ci suite à l'arrêt de la pompe de récupération d'eau 8 et au maintien en position ouverte de la vanne 9.

En outre, suite à la mise en oeuvre de l'étape de maintien à l'arrêt de la pompe de récupération d'eau 8 et de maintien en position ouverte de la vanne 9, la pompe de récupération d'eau 8 peut être mise en fonctionnement pour remplir en eau le réservoir d'eau 5 sans perturbations de celle-ci, et avec la possibilité d'exploiter toute la puissance de celle-ci.

Pratiquement, l'ouverture d'entrée d'eau 28 de la pompe de récupération d'eau 8 est disposée au-dessous de la première ouverture de passage d'eau 14 du puisard 4 de la cuve de lavage 2 suivant la hauteur de la machine à laver 1.

Ainsi, suite à l'amorçage de la pompe de récupération d'eau 8, ladite pompe de récupération d'eau 8 est remplie en eau par le bain d'eau de lavage et/ou de rinçage contenu dans le puisard 4 de la cuve de lavage 2.

Avantageusement, au cours de l'étape de maintien à l'arrêt de la pompe de récupération d'eau 8 et de maintien en position ouverte de la vanne 9, la pompe de récupération d'eau 8 est maintenue à l'arrêt pendant une durée prédéterminée.

Ici, la pompe de récupération d'eau 8 est maintenue à l'arrêt pendant une durée de l'ordre de deux secondes.

Bien entendu, la durée de maintien à l'arrêt de la pompe de récupération d'eau au cours de l'étape de maintien à l'arrêt de la pompe de récupération d'eau et de maintien en position ouverte de la vanne n'est nullement limitative, et peut être différente.

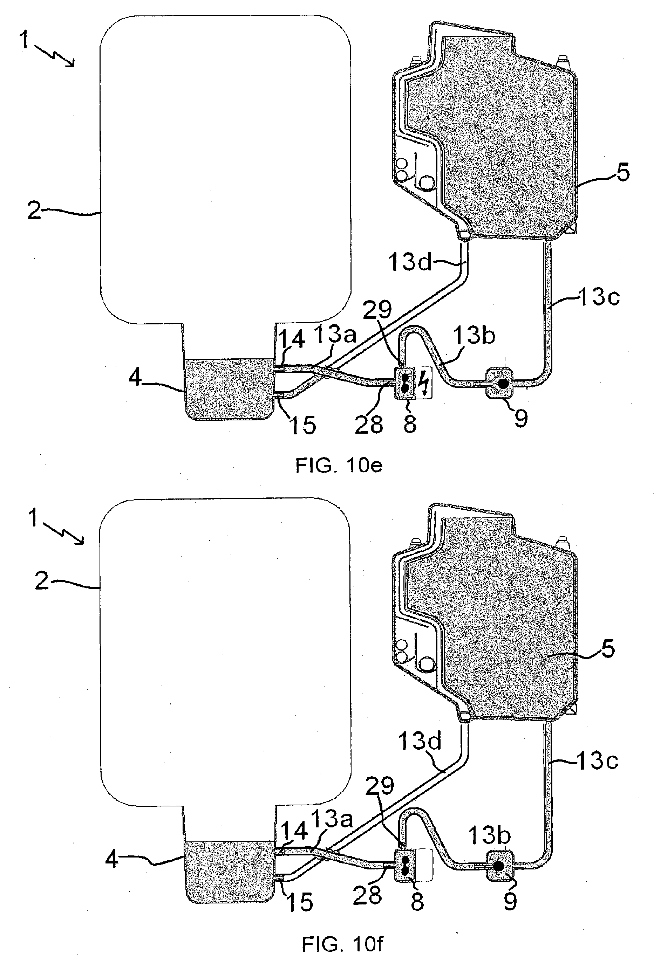

Préférentiellement, suite à l'étape de maintien à l'arrêt de la pompe de récupération d'eau 8 et de maintien en position ouverte de la vanne 9, le procédé comprend au moins une deuxième étape de mise en fonctionnement de la pompe de récupération d'eau 8 de sorte à alimenter en eau de lavage et/ou de rinçage le réservoir d'eau 5, tel qu'illustré à la figure 10e.

Ainsi, le réservoir d'eau 5 peut être rempli en eau sans perturbations de fonctionnement de la pompe de récupération d'eau 8.

De cette manière, la deuxième étape de mise en fonctionnement de la pompe de récupération d'eau 8 correspond à une étape de remplissage en eau du réservoir d'eau 5.

Dans un mode de réalisation, cette étape de remplissage en eau du réservoir d'eau 5 comprend une étape de nettoyage d'une paroi de filtration 37 disposée au-dessus du puisard 4 de la cuve de lavage 2 par la mise en fonctionnement de la pompe de récupération d'eau 8 alimentant en eau le réservoir d'eau 5 et par la mise en fonctionnement de la pompe de circulation d'eau 3 alimentant en eau au moins un moyen d'aspersion d'eau 24 de sorte à arroser la paroi de filtration 37.

Ainsi, lors de l'étape de remplissage en eau du réservoir d'eau 5 par la mise en fonctionnement de la pompe de récupération d'eau 8, les déchets retenus par une paroi de filtration 37 disposée au-dessus du puisard 4 de la cuve de lavage 2, et en particulier dans l'alignement d'une paroi inférieure 2a de la cuve de lavage 2, sont entraînés par un flux d'eau généré par la pompe de circulation d'eau 3 alimentant en eau au moins un moyen d'aspersion d'eau 24.

De cette manière, les déchets retenus par une paroi de filtration 37 disposée au-dessus du puisard 4 de la cuve de lavage 2 sont dirigés vers un dispositif de filtration 26 ménagé à l'intérieur du puisard 4 de la cuve de lavage 2, et en particulier vers un filtre à gros déchets du dispositif de filtration 26 du puisard 4.

Le procédé permet ainsi, au cours d'une étape de remplissage en eau d'un réservoir d'eau de lavage et/ou de rinçage 5, de nettoyer la paroi de filtration 37 disposée au-dessus du puisard 4 de la cuve de lavage 2 et d'éviter le dépôt de déchets sur celle-ci.

Préférentiellement, au cours de l'étape de nettoyage de la paroi de filtration 37 par la mise en fonctionnement de la pompe de récupération d'eau 8 et de la pompe de circulation d'eau 3, la pompe de circulation d'eau 3 évacue un débit d'eau réduit.

Avantageusement, la pression d'eau générée lors de la mise en fonctionnement de la pompe de circulation d'eau 3 à un débit d'eau réduit au cours de l'étape de nettoyage de la paroi de filtration 37 est inférieure à la pression d'eau générée lors de la mise en fonctionnement de la pompe de circulation d'eau 3 à un débit d'eau nominal au cours d'une phase de lavage et/ou de rinçage d'un cycle de fonctionnement de la machine à laver 1.

Cette diminution de la pression d'eau générée lors de la mise en fonctionnement de la pompe de circulation d'eau 3 au cours de l'étape de nettoyage de la paroi de filtration 37 engendre une diminution de la vitesse de rotation d'un moulinet d'aspersion 24 et une diminution de la hauteur d'arrosage depuis les buses d'un moyen d'aspersion 24.

Pratiquement, l'évacuation d'un débit d'eau réduit par la pompe de circulation d'eau 3 au cours de l'étape de nettoyage de la paroi de filtration 37 peut être mise en oeuvre par une alimentation périodique en énergie électrique de la pompe de circulation d'eau 3.

Avantageusement, au cours de l'étape de nettoyage de la paroi de filtration 37, le procédé comprend une étape de détection d'un niveau d'eau dans le puisard 4 de la cuve de lavage 2 de sorte à arrêter la pompe de circulation d'eau 3 dès l'atteinte d'un niveau d'eau prédéterminé dans le puisard 4 de la cuve de lavage 2.

Ainsi, la pompe de circulation d'eau 3 est mise en fonctionnement tant que le niveau d'eau dans la cuve de lavage 2 est supérieur au niveau d'eau prédéterminé dans le puisard 4 de la cuve de lavage 2 de sorte à arroser la paroi de filtration 37. Et la pompe de circulation d'eau 37 est arrêtée dès que le niveau d'eau prédéterminé dans le puisard 4 de la cuve de lavage 2 est atteint de sorte à éviter de désamorcer la pompe de récupération d'eau 8.

En outre, l'arrosage de la paroi de filtration 37 par la mise en fonctionnement de la pompe de circulation d'eau 3 au cours de l'étape de nettoyage évite que des déchets se déposent sur la paroi de filtration 37 pendant que le niveau d'eau baisse dans le puisard 4 de la cuve de lavage 2 à cause du remplissage en eau du réservoir d'eau 5 par la mise en fonctionnement de la pompe de récupération d'eau 8, et en particulier lorsque le niveau d'eau descend en dessous de la paroi de filtration 37 disposée au-dessus du puisard 4 de la cuve de lavage 2.

Par ailleurs, suite à l'arrêt de la pompe de circulation d'eau 3, la quantité d'eau consommée par la pompe de circulation d'eau 3 et évacuée dans la première branche du circuit hydraulique de distribution d'eau, en particulier vers au moins un moyen d'aspersion d'eau 24, retourne dans le puisard 4 de sorte à faire remonter le niveau d'eau à l'intérieur du puisard 4 et à empêcher un désamorçage de la pompe de récupération d'eau 8.

Pratiquement, l'étape de détection d'un niveau d'eau dans le puisard 4 de la cuve de lavage 2 est mise en oeuvre par un capteur de niveau d'eau 38.

Ici, le capteur de niveau d'eau 38 est un flotteur disposé à l'intérieur du puisard 4, le flotteur étant associé à un détecteur magnétique disposé le long d'une paroi verticale du puisard 4.

Bien entendu, le type de capteur de niveau d'eau n'est nullement limitatif et peut être différent, par exemple un pressostat.

Avantageusement, le niveau d'eau prédéterminé dans le puisard 4 de la cuve de lavage 2 est situé en dessous de la paroi de filtration 37 suivant la hauteur de la machine à laver 1.

Avantageusement, le procédé comprend une étape d'arrêt de la pompe de circulation d'eau 3 après l'écoulement d'une durée prédéterminée de sorte à éviter de désamorcer la pompe de récupération d'eau 8 en cas de défaillance de la détection du niveau d'eau prédéterminé dans le puisard 4 de la cuve de lavage 2.

Ainsi, la durée de l'arrosage de la paroi de filtration 37 par la mise en fonctionnement de la pompe de circulation d'eau 3 au cours de l'étape de nettoyage est limitée en cas de défaillance du capteur de niveau d'eau 38 de sorte à éviter de désamorcer la pompe de récupération d'eau 8 alimentant en eau le réservoir d'eau 5.

Suite à la deuxième étape de mise en fonctionnement de la pompe de récupération d'eau 8, le procédé comprend une étape de maintien à l'arrêt de la pompe de récupération d'eau 8 et de fermeture de la vanne 9, tel qu'illustré à la figure 10f.

Suite au remplissage en eau du réservoir d'eau 5, la vanne 9 est activée en position fermée de sorte à retenir l'eau introduite dans le réservoir d'eau 5.

Suite au remplissage en eau du réservoir d'eau 5, le puisard 4 de la cuve de lavage 2 contient une quantité d'eau minimale restante. Cette quantité d'eau minimale restante est la différence entre le volume d'eau du bain de lavage et/ou de rinçage initial et la capacité volumétrique du réservoir d'eau 5.

Ici, la quantité d'eau minimale restante dans le puisard 4 de la cuve de lavage 2 est de l'ordre de 0,5 litre.

Bien entendu, la quantité d'eau minimale restante dans le puisard de la cuve de lavage suite au remplissage en eau du réservoir d'eau n'est nullement limitative, et peut être différente.

Suite à l'étape de maintien à l'arrêt de la pompe de récupération d'eau 8 et de fermeture de la vanne 9, le procédé comprend une étape de vidange de l'eau de lavage et/ou de rinçage restant dans le puisard 4 de la cuve de lavage 2 vers un réseau d'eau usée externe.

Ainsi, la quantité d'eau minimale restante dans le puisard 4 de la cuve de lavage 2 est évacuée vers un réseau d'eau usée externe en entraînant les éventuels déchets pouvant être présents au niveau du dispositif de filtration 26 logé dans le puisard 4 de la cuve de lavage 2.

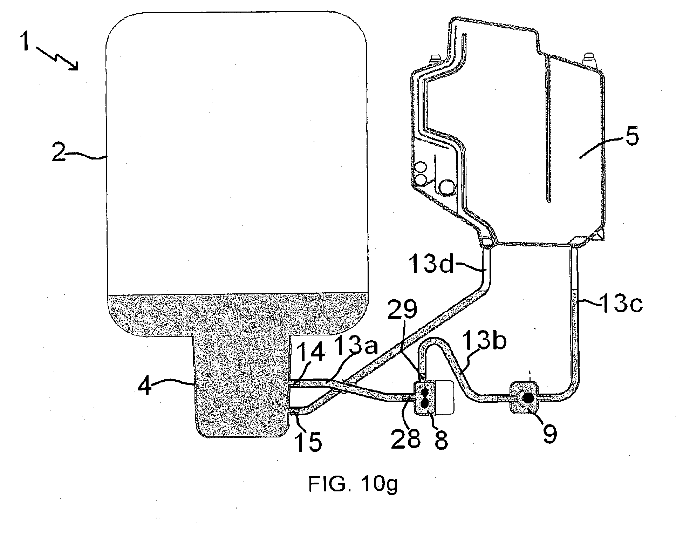

Suite à l'étape de vidange de l'eau de lavage et/ou de rinçage restant dans le puisard 4 de la cuve de lavage 2 vers un réseau d'eau usée externe, le procédé comprend une étape de vidange de l'eau de lavage et/ou de rinçage stockée dans le réservoir d'eau 5 vers le puisard 4 de la cuve de lavage 2 au cours d'une phase suivante d'un cycle de fonctionnement ou lors d'un cycle de fonctionnement suivant mis en oeuvre par la machine à laver 1, tel qu'illustré à la figure 10g.

Ainsi, suite à la mise en oeuvre de l'étape de vidange de l'eau de lavage et/ou de rinçage stockée dans le réservoir d'eau 5 vers le puisard 4 de la cuve de lavage 2, la pompe de récupération d'eau 8 peut être de nouveau mise en fonctionnement pour remplir en eau le réservoir d'eau 5 sans perturbations de celle-ci, et avec la possibilité d'exploiter toute la puissance de celle-ci puisque la branche du circuit hydraulique de distribution d'eau reliant le puisard 4 de la cuve de lavage 2 au réservoir d'eau 5 au moyen de la pompe de récupération d'eau 8 et de la vanne 9 est vidée de l'air emprisonné entre le puisard 4 de la cuve de lavage 2 et la vanne 9.

L'étape de vidange de l'eau de lavage et/ou de rinçage stockée dans le réservoir d'eau 5 vers le puisard 4 de la cuve de lavage 2 est précédée d'une étape d'ouverture de la vanne 9.

Ainsi, la vidange de l'eau de lavage et/ou de rinçage stockée dans le réservoir d'eau 5 vers le puisard 4 de la cuve de lavage 2 est mise en oeuvre par un écoulement d'eau par gravité.

Dans un mode de réalisation, le procédé comprend une étape d'ouverture de la vanne 9 avant chaque mise en fonctionnement de la pompe de récupération d'eau 8, y compris après les étapes d'amorçage de ladite pompe de récupération d'eau 8 permettant d'évacuer l'air emprisonné dans la branche du circuit hydraulique de distribution d'eau reliant le puisard 4 de la cuve de lavage 2 au réservoir d'eau 5 au moyen de la pompe de récupération d'eau 8 et de la vanne 9.

Ainsi, cette étape d'ouverture de la vanne 9 permet de garantir l'évacuation d'éventuelles bulles d'air emprisonnées dans la branche du circuit hydraulique de distribution d'eau reliant le puisard 4 de la cuve de lavage 2 au réservoir d'eau 5 au moyen de la pompe de récupération d'eau 8 et de la vanne 9 par un écoulement d'eau par gravité au travers de cette branche du circuit hydraulique de distribution d'eau.

On va à présent décrire, en référence aux figures 5 à 7, un réservoir de stockage d'eau de lavage et/ou de rinçage d'une machine à laver, et en particulier d'une machine à laver la vaisselle, conforme à l'invention.

Le réservoir d'eau 5 comprend au moins deux compartiments internes 11, 16.

Une paroi de séparation 17 est ménagée entre un premier compartiment interne 11 et un deuxième compartiment interne 16.

Ici, les premier et deuxième compartiments internes 11, 16 du réservoir d'eau 5 sont des zones de stockage d'eau ménagées à l'intérieur du réservoir d'eau 5.

Dans un mode de réalisation, le réservoir d'eau 5 comprend une première paroi en forme de coque 5a et une deuxième paroi en forme de coque 5b.

Lesdits au moins deux compartiments internes 11, 16 du réservoir d'eau 5 sont formées par l'assemblage des deux parois en forme de coque 5a, 5b du réservoir d'eau 5.

Les première et deuxième canalisations internes 10, 21, ainsi que la paroi de séparation 17, sont ménagées à l'intérieur du réservoir d'eau 5 et formées par l'assemblage des deux parois en forme de coque 5a, 5b du réservoir d'eau 5.

La fixation des deux parois en forme de coque 5a, 5b du réservoir d'eau 5 peut être réalisée par soudure, en particulier par un procédé de soudure en miroir au moyen de lames chauffantes, ou par un procédé de soudure par ultrasons, ou par un procédé de soudure par vibration.

Bien entendu, le mode de fixation des deux parois en forme de coque 5a, 5b du réservoir d'eau 5 n'est nullement limitatif et peut être différent, en particulier par vissage.

Les première et deuxième parois en forme de coque 5a, 5b comprennent des cloisons formant respectivement une première et une deuxième parties des première et deuxième canalisations internes 10, 21 et de la paroi de séparation 17.

Les cloisons des première et deuxième parties des première et deuxième canalisations internes 10, 21 et de la paroi de séparation 17 ménagées dans les première et deuxième parois en forme de coque 5a, 5b coopèrent ensemble de sorte à former les première et deuxième canalisations internes 10, 21 et la paroi de séparation 17.

Ici, la paroi périphérique 18 du réservoir d'eau 5 comprend une double cloison de sorte à garantir la robustesse et l'étanchéité du réservoir d'eau 5 formé par l'assemblage de deux parois en forme de coque 5a, 5b.

Préférentiellement, le réservoir d'eau 5 est en matière plastique.

A titre d'exemple nullement limitatif, le réservoir d'eau 5 est réalisé en polypropylène, ou en acrylonitrile butadiène styrène communément appelé ABS.

Ici, la matière plastique employée est destinée à permettre la soudure des première et deuxième parois en forme de coque 5a, 5b du réservoir d'eau 5.

La matière plastique du réservoir d'eau 5 est définie de sorte à minimiser le coût d'obtention de celui-ci, à garantir la stabilité dimensionnelle du réservoir d'eau 5, et la compatibilité avec l'eau de lavage et/ou de rinçage introduite dans le réservoir d'eau 5.

La matière plastique peut également être chargée, en particulier avec un agent antibactérien.

Dans un mode de réalisation, le réservoir d'eau 5 est isolé thermiquement et ou acoustiquement par au moins une couche de matériau (non représentée).

L'isolant thermique et/ou acoustique recouvrant le réservoir d'eau 5 peut être constitué d'une ou plusieurs couches réalisées à partir d'un seul matériau ou de plusieurs matériaux, tel que par exemple du bitume et/ou du feutre.

Bien entendu, le nombre de couches d'isolant thermique et/ou acoustique et le type d'isolant thermique et/ou acoustique ne sont nullement limitatifs et peuvent être différents.

L'isolation thermique du réservoir d'eau 5 permet de garantir une meilleure conservation de l'énergie calorifique de l'eau d'au moins une phase de lavage et/ou de rinçage pour une réutilisation pendant un cycle de fonctionnement suivant mis en oeuvre par la machine à laver.

Dans un mode de réalisation, l'isolant thermique et/ou acoustique peut être disposé entre le réservoir d'eau 5 et la cuve de lavage 2.

Dans un mode de réalisation, le réservoir d'eau 5 peut être réalisé dans un matériau anti-bactériologique ou anti-fongicide de sorte à éviter la formation d'un bio film sur les parois internes de celui-ci.

Le matériau utilisé pour réaliser le réservoir d'eau 5 peut comprendre par exemple des ions argent de sorte à éviter la formation d'un bio film sur les parois internes de celui-ci.

Préférentiellement, la ou les cloisons constituant le contour périphérique dudit au moins un compartiment interne 11, 16 du réservoir d'eau 5 comprennent des parties de cloison s'étendant suivant la largeur du réservoir d'eau, où ces parties de cloison s'étendant suivant la largeur du réservoir d'eau 5 sont inclinées de bas en haut, ou inversement, suivant la hauteur du réservoir d'eau 5.

Ainsi, suite au stockage de l'eau de lavage et/ou de rinçage dans le réservoir d'eau 5 où ladite eau est stagnante, des salissures se déposent sur la ou les cloisons constituant le contour périphérique dudit au moins un compartiment interne 11, 16 du réservoir d'eau 5. Et lors de la vidange en eau du réservoir d'eau 5 au travers de la première ouverture de passage d'eau 6, les salissures déposées à l'intérieur dudit au moins un compartiment interne 11, 16 du réservoir d'eau 5 sont entraînées par l'écoulement d'eau le long des parties de cloison inclinées de sorte à éviter qu'une partie de ces salissures ne soient retenues dans le réservoir d'eau 5.

De cette manière, le réservoir d'eau 5 est maintenu propre en évacuant les salissures déposées à l'intérieur de celui-ci de sorte à éviter une contamination de l'eau de lavage et/ou de rinçage stockée dans le réservoir d'eau 5 au cours d'une phase suivante d'un cycle de fonctionnement ou lors d'un cycle de fonctionnement suivant de la machine à laver 1.

Ici, la ou les cloisons constituant le contour périphérique dudit au moins un compartiment interne 11, 16 du réservoir d'eau 5 comprennent la paroi périphérique 18 du réservoir d'eau 5 et la paroi 25 ménagée entre le premier compartiment interne 11 et la première canalisation interne 10.

La machine à laver 1 comprend une unité de commande (non représentée), ladite unité de commande comportant au moins une carte électronique. Ladite au moins une carte électronique comprend au moins un microcontrôleur apte à mettre en oeuvre des cycles de fonctionnement prédéterminés de la machine à laver 1. Ainsi, l'unité de commande contrôle notamment la pompe de circulation d'eau 3, la pompe de récupération d'eau 8, la pompe de vidange 27, la vanne 9 et la vanne d'alimentation en eau du réseau de sorte à récupérer de l'eau de lavage et/ou de rinçage provenant de la cuve de lavage 2 dans le réservoir d'eau 5 au cours d'un cycle de fonctionnement, et à réutiliser la quantité d'eau stockée dans le réservoir d'eau 5 au cours d'une phase suivante d'un cycle de fonctionnement ou lors d'un cycle de fonctionnement suivant, comme décrit précédemment.

Grâce à la présente invention, suite à la mise en oeuvre de l'étape de maintien à l'arrêt de la pompe de récupération d'eau et de maintien en position ouverte de la vanne, l'air contenu dans la branche du circuit hydraulique de distribution d'eau reliant le puisard de la cuve de lavage au réservoir d'eau au travers de la pompe de récupération d'eau et de la vanne est évacué vers le puisard de la cuve de lavage au moyen de l'écoulement d'eau circulant par gravité depuis le réservoir d'eau vers le puisard de la cuve de lavage et traversant la vanne et la pompe de récupération d'eau.

De cette manière, suite au remplissage en eau du réservoir d'eau jusqu'à un niveau d'eau prédéterminé, la branche du circuit hydraulique de distribution d'eau reliant le puisard de la cuve de lavage au réservoir d'eau au moyen de la pompe de récupération d'eau et de la vanne est vidée de l'air emprisonné entre la pompe de récupération d'eau et la vanne au moyen de l'écoulement d'eau circulant par gravité depuis le réservoir d'eau vers le puisard de la cuve de lavage et traversant la vanne et la pompe de récupération d'eau.

Bien entendu, de nombreuses modifications peuvent être apportées aux exemples de réalisation décrits précédemment sans sortir du cadre de l'invention.

Ainsi, la machine à laver peut être une machine à laver la vaisselle, une machine à laver le linge, ou une machine à laver et à sécher le linge.

## Revendications

1. Procédé de commande en fonctionnement d'une machine à laver (1) comprenant une cuve de lavage (2), un réservoir d'eau de lavage et/ou de rinçage (5), un circuit hydraulique de distribution d'eau, ledit circuit hydraulique de distribution d'eau reliant ladite cuve de lavage (2) de ladite machine à laver (1) audit réservoir d'eau (5), ledit circuit hydraulique de distribution d'eau comprenant :
- une pompe de récupération d'eau (8) de sorte à remplir en eau de lavage et/ou de rinçage au moins un compartiment interne (11, 16) de stockage d'eau dudit réservoir d'eau (5) depuis un puisard (4) de ladite cuve de lavage (2),
- une vanne (9), ladite vanne (9) étant montée dans ledit circuit hydraulique de distribution d'eau entre ladite pompe de récupération d'eau (8) et ledit réservoir d'eau (5),
ledit procédé comprenant une étape de remplissage en eau de lavage et/ou de rinçage dudit réservoir d'eau (5),
**caractérisé en ce que** ladite étape de remplissage en eau comprend :
- une étape d'alimentation en eau de lavage et/ou de rinçage dudit puisard (4) de ladite cuve de lavage (2) ;
- une étape d'ouverture de ladite vanne (9) ;
- une première étape de mise en fonctionnement de ladite pompe de récupération d'eau (8) de sorte à évacuer une partie de l'eau de lavage et/ou de rinçage depuis ledit puisard (4) de ladite cuve de lavage (2) vers ledit réservoir d'eau (5) ;
- une étape de maintien à l'arrêt de ladite pompe de récupération d'eau (8) et de maintien en position ouverte de ladite vanne (9) de sorte à évacuer de l'air emprisonné dans ledit circuit hydraulique de distribution d'eau entre ledit puisard (4) de ladite cuve de lavage (2) et ledit réservoir d'eau (5) par un écoulement d'eau par gravité vers ledit puisard (4) de ladite cuve de lavage (2).

2. Procédé de commande en fonctionnement d'une machine à laver (1) selon la revendication 1, **caractérisé en ce qu'**au cours de la première étape de mise en fonctionnement de ladite pompe de récupération d'eau (8), ladite pompe de récupération d'eau (8) est mise en fonctionnement pendant une durée prédéterminée.

3. Procédé de commande en fonctionnement d'une machine à laver (1) selon la revendication 1 ou 2, **caractérisé en ce qu'**au cours de l'étape de maintien à l'arrêt de ladite pompe de récupération d'eau (8) et de maintien en position ouverte de ladite vanne (9), ladite pompe de récupération d'eau (8) est maintenue à l'arrêt pendant une durée prédéterminée.

4. Procédé de commande en fonctionnement d'une machine à laver (1) selon l'une quelconque des revendications 1 à 3, **caractérisé en ce qu**'au cours de l'étape d'alimentation en eau de lavage et/ou de rinçage dudit puisard (4) de ladite cuve de lavage (2), ladite vanne (9) est maintenue en position fermée

5. Procédé de commande en fonctionnement d'une machine à laver (1) selon l'une quelconque des revendications 1 à 4, **caractérisé en ce que** suite à l'étape de maintien à l'arrêt de ladite pompe de récupération d'eau (8) et de maintien en position ouverte de ladite vanne (9), ledit procédé comprend au moins une deuxième étape de mise en fonctionnement de ladite pompe de récupération d'eau (8) de sorte à alimenter en eau de lavage et/ou de rinçage ledit réservoir d'eau (5).

6. Procédé de commande en fonctionnement d'une machine à laver (1) selon la revendication 5, **caractérisé en ce que** suite à la deuxième étape de mise en fonctionnement de ladite pompe de récupération d'eau (8), ledit procédé comprend une étape de maintien à l'arrêt de ladite pompe de récupération d'eau (8) et de fermeture de ladite vanne (9).

7. Procédé de commande en fonctionnement d'une machine à laver (1) selon la revendication 6, **caractérisé en ce que** suite à l'étape de maintien à l'arrêt de ladite pompe de récupération d'eau (8) et de fermeture de ladite vanne (9), ledit procédé comprend une étape de vidange de l'eau de lavage et/ou de rinçage restant dans ledit puisard (4) de ladite cuve de lavage (2) vers un réseau d'eau usée externe.

8. Procédé de commande en fonctionnement d'une machine à laver (1) selon la revendication 7, **caractérisé en ce que** suite à l'étape de vidange de l'eau de lavage et/ou de rinçage restant dans ledit puisard (4) de ladite cuve de lavage (2) vers un réseau d'eau usée externe, ledit procédé comprend une étape de vidange de l'eau de lavage et/ou de rinçage stockée dans ledit réservoir d'eau (5) vers ledit puisard (4) de ladite cuve de lavage (2) au cours d'une phase suivante d'un cycle de fonctionnement ou lors d'un cycle de fonctionnement suivant mis en oeuvre par ladite machine à laver (1).

9. Procédé de commande en fonctionnement d'une machine à laver (1) selon la revendication 8, **caractérisé en ce que** l'étape de vidange de l'eau de lavage et/ou de rinçage stockée dans ledit réservoir d'eau (5) vers ledit puisard (4) de ladite cuve de lavage (2) est précédée d'une étape d'ouverture de ladite vanne (9).

10. Machine à laver (1), **caractérisée en ce qu'**elle comprend une unité de commande adaptée à mettre en oeuvre le procédé de commande conforme à l'une quelconque des revendications 1 à 9.

## Patentansprüche

1. Verfahren zum Steuern in Betrieb einer Waschmaschine (1), umfassend einen Waschbehälter (2), einen Wasch- und/oder Spülwassertank (5), einen hydraulischen Wasserverteilungskreis, wobei der besagte hydraulische Wasserverteilungskreis den besagten Waschbehälter (2) der besagten Waschmaschine (1) mit dem besagten Wassertank (5) verbindet, wobei der besagte hydraulische Wasserverteilungskreis Folgendes umfasst:
- eine Pumpe zur Wasserrückgewinnung (8), um mindestens eine Innenkammer (11, 16) des besagten Wassertanks (5) zur Wasserspeicherung aus einem Pumpensumpf (4) des besagten Waschbehälters (2) mit Wasch- und/oder Spülwasser zu befüllen;
- ein Ventil (9), wobei das besagte Ventil (9) im hydraulischen Wasserverteilungskreis zwischen der besagten Pumpe zur Wasserrückgewinnung (8) und dem besagten Wassertank (5) angeordnet ist,
wobei das besagte Verfahren einen Schritt des Befüllens des besagten Wassertanks (5) mit Wasch- und/oder Spülwasser umfasst,
**dadurch gekennzeichnet, dass** der besagte Schritt des Befüllens mit Wasser Folgendes umfasst:
- einen Schritt des Versorgens des besagten Pumpensumpfes (4) des besagten Waschbehälters (2) mit Wasch- und/oder Spülwasser;
- einen Schritt des Öffnen des besagten Ventils (9);
- einen ersten Schritt der Inbetriebsetzung der besagten Pumpe zur Wasserrückgewinnung (8), um einen Teil des Wasch- und/oder Spülwassers aus dem besagten Pumpensumpf (4) des besagten Waschbehälters (2) in den besagten Wassertank (5) abzuleiten;
- einen Schritt des Außerbetriebhaltens der besagten Pumpe zur Wasserrückgewinnung (8) und des Haltens des besagten Ventils (9) in geöffneter Position, um Luft, die im besagten hydraulischen Wasserverteilungskreis zwischen dem besagten Pumpensumpf (4) des besagten Waschbehälters (2) und dem besagten Wassertank (5) eingeschlossen ist, durch ein Abfließen des Wassers mittels Schwerkraft in den besagten Pumpensumpf (4) des besagten Waschbehälters (2) abzuleiten.

2. Verfahren zum Steuern in Betrieb einer Waschmaschine (1) nach Anspruch 1, **dadurch gekennzeichnet, dass** während des ersten Schrittes der Inbetriebsetzung der besagten Pumpe zur Wasserrückgewinnung (8) die besagte Pumpe zur Wasserrückgewinnung (8) während einer vorausbestimmten Dauer in Betrieb gesetzt ist.

3. Verfahren zum Steuern in Betrieb einer Waschmaschine (1) nach Anspruch 1 oder 2, **dadurch gekennzeichnet, dass** während des Schrittes des Außerbetriebhaltens der besagten Pumpe zur Wasserrückgewinnung (8) und des Haltens des besagten Ventils (9) in geöffneter Position die besagte Pumpe zur Wasserrückgewinnung (8) während einer vorausbestimmten Dauer außer Betrieb gehalten wird.

4. Verfahren zum Steuern in Betrieb einer Waschmaschine (1) nach einem beliebigen der Ansprüche 1 bis 3, **dadurch gekennzeichnet, dass** während des Schrittes des Versorgens des besagten Pumpensumpfes (4) des besagten Waschbehälters (2) mit Wasch- und/oder Spülwasser das besagte Ventil (9) in geschlossener Position gehalten wird.

5. Verfahren zum Steuern in Betrieb einer Waschmaschine (1) nach einem beliebigen der Ansprüche 1 bis 4, **dadurch gekennzeichnet, dass** nach dem Schritt des Außerbetriebhaltens der besagten Pumpe zur Wasserrückgewinnung (8) und des Haltens des besagten Ventils (9) in geöffneter Position das Verfahren mindestens einen zweiten Schritt der Inbetriebsetzung der besagten Pumpe zur Wasserrückgewinnung (8) umfasst, um den besagten Wassertank (5) mit Wasch- und/oder Spülwasser zu versorgen.

6. Verfahren zum Steuern in Betrieb einer Waschmaschine (1) nach Anspruch 5, **dadurch gekennzeichnet, dass** nach dem zweiten Schritt der Inbetriebsetzung der besagten Pumpe zur Wasserrückgewinnung (8) das besagte Verfahren einen Schritt des Außerbetriebhaltens der besagten Pumpe zur Wasserrückgewinnung (8) und des Schließens des besagten Ventils (9) umfasst.

7. Verfahren zum Steuern in Betrieb einer Waschmaschine (1) nach Anspruch 6, **dadurch gekennzeichnet, dass** nach dem Schritt des Außerbetriebhaltens der besagten Pumpe zur Wasserrückgewinnung (8) und des Schließens des besagten Ventils (9) das besagte Verfahren einen Schritt des Ableerens des im besagten Pumpensumpf (4) des besagten Waschbehälters (2) verbliebenen Wasch- und/oder Spülwassers in ein externes Abwassernetz umfasst.

8. Verfahren zum Steuern in Betrieb einer Waschmaschine (1) nach Anspruch 7, **dadurch gekennzeichnet, dass** nach dem Schritt des Ableerens des im besagten Pumpensumpf (4) des besagten Waschbehälters (2) verbliebenen Wasch- und/oder Spülwassers in ein externes Abwassernetz das besagte Verfahren einen Schritt des Ableerens des im besagten Wassertank (5) gespeicherten Wasch- und/oder Spülwassers in den besagten Pumpensumpf (4) des besagten Waschbehälters (2) während einer darauffolgenden Phase eines Betriebszyklus oder bei einem folgenden Betriebszyklus, der von der besagten Waschmaschine (1) ausgeführt wird, umfasst.

9. Verfahren zum Steuern in Betrieb einer Waschmaschine (1) nach Anspruch 8, **dadurch gekennzeichnet, dass** dem Schritt des Ableerens des im besagten Wassertank (5) gespeicherten Wasch- und/oder Spülwassers in den besagten Pumpensumpf (4) des besagten Waschbehälters (2) ein Schritt des Öffnens des besagten Ventils (9) vorausgeht.

10. Waschmaschine (1), **dadurch gekennzeichnet, dass** sie eine Steuerungseinheit umfasst, die angepasst ist, um das Verfahren zum Steuern nach einem der Ansprüche 1 bis 9 anzuwenden.

## Claims

1. A method for controlling the operation of a washing machine (1) comprising a wash tub (2), a washing and/or rinsing water tank (5), a hydraulic water distribution circuit, said hydraulic water distribution circuit connecting said wash tub (2) of said washing machine (1) to said water tank (5), said hydraulic water distribution circuit comprising:
- a water recovery pump (8) so as to fill with washing and/or rinsing water at least one internal compartment (11, 16) for storing water from said water tank (5), from a sump (4) of said wash tub (2),
- a valve (9), said valve (9) being mounted in said hydraulic water distribution circuit between said water recovery pump (8) and said water tank (5),
said method comprising a step of filling said water tank (5) with washing and/or rinsing water,
**characterized in that** said step of filling with water comprises:
- a step of supplying said sump (4) with washing and/or rinsing water from said wash tub (2);
- a step of opening said valve (9);
- a first step of turning on said water recovery pump (8) so as to discharge some of the washing and/or rinsing water from said sump (4) of said wash tub (2) to said water tank (5);
- a step of keeping said water recovery pump (8) turned off and keeping said valve (9) in the open position so as to discharge air trapped inside said hydraulic water distribution circuit between said sump (4) of said wash tub (2) and said water tank (5) by a flow of water by gravity to said sump (4) of said wash tub (2).

2. A method for controlling the operation of a washing machine (1) according to claim 1, **characterized in that** during the first step of turning on said water recovery pump (8), said water recovery pump (8) is turned on for a predetermined period of time.

3. A method for controlling the operation of a washing machine (1) according to claim 1 or 2, **characterized in that** during the step of keeping said water recovery pump (8) turned off and keeping said valve (9) in the open position, said water recovery pump (8) is kept turned off for a predetermined period of time.

4. A method for controlling the operation of a washing machine (1) according to any one of the claims 1 to 3, **characterized in that** during the step of supplying said sump (4) with washing and/or rinsing water from said wash tub (2), said valve (9) is kept in a closed position.

5. A method for controlling the operation of a washing machine (1) according to any one of the claims 1 to 4, **characterized in that** after the step of keeping said water recovery pump (8) turned off and keeping said valve (9) in the open position, said method comprises at least one second step of turning on said water recovery pump (8) so as to supply said water tank (5) with washing and/or rinsing water.

6. A method for controlling the operation of a washing machine (1) according to claim 5, **characterized in that** after the second step of turning on said water recovery pump (8), said method comprises a step of keeping said water recovery pump (8) turned off and closing said valve (9).

7. A method for controlling the operation of a washing machine (1) according to claim 6, **characterized in that** after the step of keeping said water recovery pump (8) turned off and closing said valve (9), said method comprises a step of draining the washing and/or rinsing water that remains in said sump (4) of said wash tub (2) to an external wastewater network.

8. A method for controlling the operation of a washing machine (1) according to claim 7, **characterized in that** after the step of draining the washing and/or rinsing water that remains in said sump (4) of said wash tub (2) to an external wastewater network, said method comprises a step of draining the washing and/or rinsing water stored in said water tank (5) to said sump (4) of said wash tub (2) during a following phase of an operating cycle or during a following operating cycle implemented by said washing machine (1).

9. A method for controlling the operation of a washing machine (1) according to claim 8, **characterized in that** the step of draining the washing and/or rinsing water stored in said water tank (5) to said sump (4) of said wash tub (2) is preceded by a step of opening said valve (9).

10. A washing machine (1), **characterized in that** it comprises a control unit adapted to implement the method for controlling in accordance with any one of the claims 1 to 9.
